# EUROPEAN PATENT SPECIFICATION

(11) **EP 1 343 233 B1**
(45) Date of publication and mention of the grant of the patent: **23.04.2014**
(21) Application number: 03004846.6
(22) Date of filing: 05.03.2003
(51) Int. Cl.: H02B 13/01

(54) **Switchgear**
Schaltanlage
Installation de commutation

(30) Priority: 06.03.2002 JP 2002060962; 13.02.2003 JP 2003035572
(43) Date of publication of application: 10.09.2003
(73) Proprietor: Kabushiki Kaisha Toshiba, Tokyo 105-8001 (JP)
(72) Inventor: Sato, Junichi, Intellectual Property Division, Minato-ku, Tokyo 105-8001 (JP); Sakaguchi, Osamu, Intellectual Property Division, Minato-ku, Tokyo 105-8001 (JP); Kubota, Nobutaka, Intellectual Property Division, Minato-ku, Tokyo 105-8001 (JP); Miyagawa, Masaru, Intellectual Property Division, Minato-ku, Tokyo 105-8001 (JP); Ohno, Masamichi, Intellectual Property Division, Minato-ku, Tokyo 105-8001 (JP); Saito, Toshihisa, Intellectual Property Division, Minato-ku, Tokyo 105-8001 (JP); Shioiri, Tetsu, Intellectual Property Division, Minato-ku, Tokyo 105-8001 (JP); Makishima, Satoshi, Intellectual Property Division, Minato-ku, Tokyo 105-8001 (JP); Kinoshita, Susumu, Intellectual Property Division, Minato-ku, Tokyo 105-8001 (JP)
(74) Representative: Henkel, Breuer & Partner

(56) References cited:
- EP-A- 0 570 688
- EP-A- 1 107 409
- EP-A- 1 152 444
- DE-A- 1 540 527
- FR-A- 2 745 817
- GB-A- 753 375
- US-A- 4 037 187
- US-A- 5 698 831

## Description

The present invention relates to a closed switch gear(enclosed type switch gear).

The closed switch gear constitutes a power supply system. The closed switch gear comprises a switching equipment and a switch gear main body. The switching equipment is housed inside the switch gear main body. The switching equipment is such as a vacuum circuit breaker or a vacuum disconnecting switch.

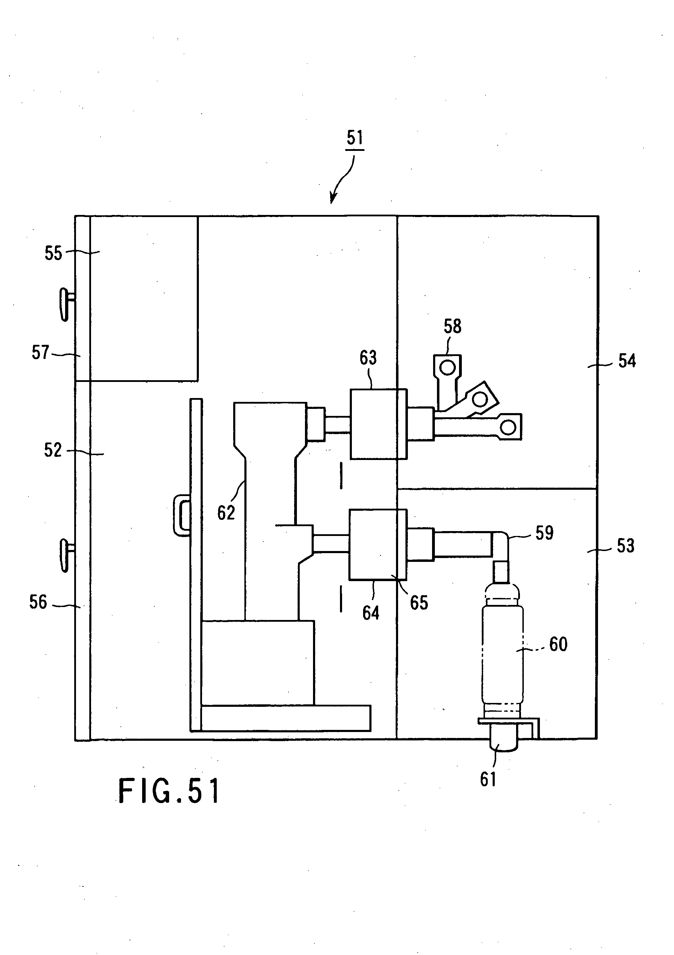

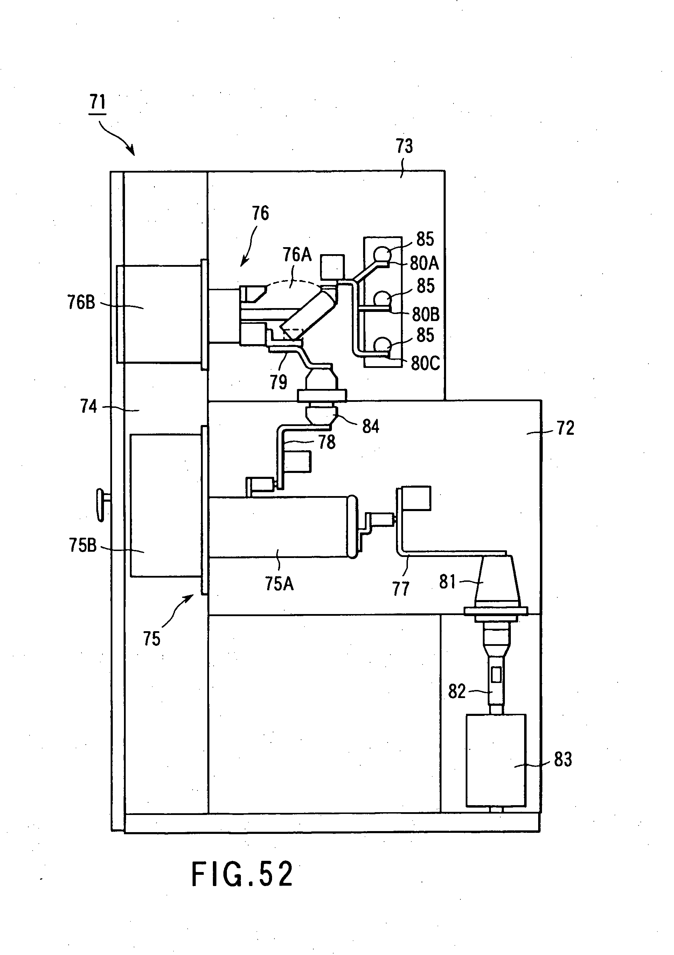

An example of a switch gear will be described with reference to FIGS. 51 and 52.

FIG. 51 is a right side view showing an example of configuration of an air insulating switch gear, a typical switch gear.

In the air insulating switch gear, the interior of a switch gear main body 51 is partitioned by partition plates according to a closing form. Thus, an equipment housing chamber 52, a receiving chamber 53, and a bus chamber 54 are provided in the switch gear main body 51.

A control chamber 55 is provided above the equipment housing chamber 52. Closable doors 56 and 57 are provided in the front of the equipment housing chamber 52 and control chamber 55, respectively.

A bus section 58 that connects unit circuits together is provided inside the switch gear main body 51.

A branching conductor 59 is provided inside the switch gear main body 51. The tip of the branching conductor 59 is connected to a power cable 61 via a cable head 60.

A moving circuit breaker 62 is housed in the equipment housing chamber 52. The moving circuit breaker 62 is electrically connected to the bus section 58 via a main circuit disconnecting switch section 63 to which a partition plate that separates the equipment housing chamber 52 from the bus chamber 54 is attached. The moving circuit breaker 62 is electrically connected to a receiving branching conductor 59 via a main circuit disconnecting switch section 64 attached to a partition plate that separates the equipment housing chamber 52 from the receiving chamber 53. The main circuit disconnecting switch section 63 is mounted above the main circuit disconnecting switch section 64. The upper main circuit disconnecting switch section 63 is integrated with the bus section 58. The lower main circuit disconnecting switch section 64 comprises a through-type current transformer 65.

In this air insulating switch gear, the insulation of the main circuit may be degraded by an installation environment (dust, humidity, or the like) to cause an accident such as a short circuit or a ground fault. Efforts have been made to increase the size of the entire air insulating switch gear to ensure a sufficient insulation distance, thus preventing such an accident.

Further, a C-GIS (cubicle type gas insulating switch gear) is popular in which all main circuit constituting equipment is housed in a closed container, into which an insulating gas (for example, an SF₆ gas) is sealed, thus reducing the size of the switch gear.

FIG. 52 is a right side view of configuration of a cubicle type SF₆ gas insulating switch gear, a typical closed switch gear.

A receiving chamber 72, a bus chamber 73, and a control chamber 74 are provided inside a switch gear main body 71 of this cubicle type SF₆ insulating switch gear.

The receiving chamber 72 is a closer container. A circuit breaking section 75A of a circuit breaker 75 is disposed inside the receiving chamber 72.

The bus chamber 73 is a closed container. A disconnecting switch section 76A of a three-position disconnecting switch (on-off-ground) 76 is disposed inside the bus chamber 73.

A low-pressure insulating gas (for example, an SF₆ gas) is sealed into the receiving chamber 72 and bus chamber 73. This configuration makes the cubicle type SF₆ gas insulating switch gear compact.

One conductor 77 of the circuit breaking section 75A of the circuit breaker 75 housed in the receiving chamber 72 is connected to a power cable 82 via a cable head 81. The power cable 82 comprises a through-type current transformer 83.

The other conductor 78 of the circuit breaking section 75A of the circuit breaker 75 is connected to one conductor 79 of the disconnecting switch section 76A of the three-position disconnecting switch 76 in the bus chamber 73 via a insulating spacer 84 passing through the receiving chamber 72 and the bus chamber 73. The other conductors 80A to 80C of the disconnecting switch section 76A of the three-position disconnecting switch 76 are connected to a bus 85 that connects unit circuits together. The conductors 80A to 80C are electrically connected to other units.

The control chamber 74 is provided with an operating mechanism 75B for the circuit breaker 75 and an operating mechanism 76B for the three-position disconnecting switch 76.

A problem with the air insulating switch gear is that the entire switch gear must be large-sized in order to prevent insulation from being degraded by the installation environment and to ensure a sufficient insulation distance. Further, the main circuit section must be periodically cleaned in order to remove dust or the like.

With the cubicle type SF₆ gas insulating gas switch gear into which the insulating gas (SF₆ gas) is sealed to reduce its size, a problem is that the insulating gas is expensive. Further, much time and high skills are required to produce the airtight container into which the insulating gas is sealed.

Furthermore, in the cubicle type SF₆ gas insulating switch gear, the airtight container is made compact using the insulating gas. However, the assembly of conductors connecting pieces of equipment together is limited.

Moreover, for the cubicle type SF₆ gas insulating switch gear, various circuit configurations are implemented by designing each of them. Thus, much time is required to produce the cubicle type SF₆ gas insulating switch gear. Many types of design drawings are required. It is thus difficult to standardize required equipment. As a result, the cubicle type SF₆ gas insulating switch gear is expensive.

Further, a large number of bolts and nuts are used to construct the main circuit section of the air insulating switch gear or cubicle type SF₆ gas insulating switch gear. Therefore, much time is required for assembly and inspection.

EP 0 570 688 discloses a solid insulated switchgear.

It is an object of the present invention to provide a closed switch gear that is easy to introduce.

According to an embodiment of the present invention, there is provided a switch gear comprising a plurality of components respectively including a switch gear constituting equipment, an insulating section to insulate the switch gear constituting equipment, and a joining section to join the switch gear constituting equipment in a vertical direction, wherein the components are jointed together in the vertical direction.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a side sectional view showing a first example of configuration of a switch gear according to the first embodiment of the present invention;
FIG. 2 is a side sectional view showing a second example of configuration of a switch gear according to the first embodiment;
FIG. 3 is a side sectional view showing a third example of configuration of a switch gear according to the first embodiment;
FIG. 4 is a side sectional view showing a fourth example of configuration of a switch gear according to the first embodiment;
FIG. 5 is a diagram showing the first example of electric circuits composed of the switch gear according to the first embodiment;
FIG. 6 is a side sectional view showing a fifth example of configuration of a switch gear according to the first embodiment;
FIG. 7 is a side sectional view showing a sixth example of configuration of a switch gear according to the first embodiment;
FIG. 8 is a diagram showing the second example of electric circuits composed of the switch gear according to the first embodiment;
FIG. 9 is a side sectional view showing a seventh example of configuration of a switch gear according to the first embodiment;
FIG. 10 is a side sectional view showing a eighth example of configuration of a switch gear according to the first embodiment;
FIG. 11 is a side sectional view showing a ninth example of configuration of a switch gear according to the first embodiment;
FIG. 12 is a side sectional view showing an example of configuration of a switch gear according to the third embodiment of the present invention;
FIG. 13 is a diagram showing a first example of electric circuits composed of the switch gear according to the third embodiment;
FIG. 14 is a diagram showing a second 'example of electric circuits composed of the switch gear according to the third embodiment;
FIG. 15 is a diagram showing a third example of electric circuits composed of the switch gear according to the third embodiment;
FIG. 16 is a side sectional view showing an example of configuration of a switch gear according to the fifth embodiment of the present invention;
FIG. 17 is an enlarged view of a section A of the switch gear according to the fifth embodiment;
FIG. 18 is a chart showing the relationship between the position of the bottom surface side tip of a conductive shield and a maximum electric field strength in the hole in the valve movable side mold section;
FIG. 19 is a side sectional view showing an example of configuration of a switch gear according to the sixth embodiment of the present invention;
FIG. 20 is an enlarged view of a section B of the switch gear according to the sixth embodiment;
FIG. 21 is a side sectional view showing an example of configuration of a switch gear according to the seventh embodiment of the present invention;
FIG. 22 is a side sectional view showing an example of configuration of a switch gear according to the eighth embodiment of the present invention;
FIG. 23 is an enlarged view of a section C of the switch gear according to the eighth embodiment;
FIG. 24 is a side sectional view showing an example of configuration of a switch gear according to the ninth embodiment of the present invention;
FIG. 25 is an enlarged view of a section D of the switch gear according to the ninth embodiment;
FIG. 26 is a side sectional view showing an example of configuration of a switch gear according to the tenth embodiment of the present invention;
FIG. 27 is a side sectional view showing an example of configuration of a switch gear 'according to the eleventh embodiment of the present invention;
FIG. 28 is a side sectional view showing an example of configuration of a switch gear according to the twelfth embodiment of the present invention;
FIG. 29 is a front view showing an example of the switch gear according to the twelfth embodiment;
FIG. 30 is a side sectional view showing an example of configuration of a switch gear according to the thirteenth embodiment of the present invention;
FIG. 31 is a side sectional view showing an example of configuration of a switch gear according to the fourteenth embodiment of the present invention;
FIG. 32 is a front sectional view showing an example of configuration of a switch gear according to the sixteenth embodiment of the present invention;
FIG. 33 is a side sectional view showing an example of configuration of a switch gear according to the seventeenth embodiment of the present invention;
FIG. 34 is a side sectional view showing the first example of configuration of a switch gear according to the eighteenth embodiment of the present invention;
FIG. 35 is a side sectional view showing the second example of configuration of a switch gear according to the eighteenth embodiment;
FIG. 36 is a side sectional view showing an example of configuration of a switch gear according to the nineteenth embodiment of the present invention;.
FIG. 37 is a side sectional view showing the first example of configuration of a switch gear according to the twentieth embodiment of the present invention;
FIG. 38 is a side sectional view showing the second example of configuration of a switch gear according to the twentieth embodiment;
FIG. 39 is a diagram showing an example of electric circuits composed of the switch gear according to the twentieth embodiment;
FIG. 40 is a side sectional view showing an example of configuration of a switch gear according to the twenty-first embodiment of the present invention;
FIG. 41 is a side sectional view showing an example of configuration of a switch gear according to the twenty-second embodiment of the present invention;
FIG. 42 is a schematic view showing an example of a method of connecting components of a closed switch gear according to the twenty-third embodiment of the present invention;
FIG. 43 is a side sectional view showing an example of joining sections of the closed switch gear according to the twenty-third embodiment;
FIG. 44 is a side sectional view showing an example of joining sections of the closed switch gear according to the twenty-fourth embodiment of the present invention;
FIG. 45 is a side sectional view showing an example of joining sections of the closed switch gear according to the twenty-fifth embodiment of the present invention;
FIG. 46 is a side sectional view showing an example of joining sections of the closed switch gear according to the twenty-sixth embodiment of the present invention;
FIG. 47 is a characteristic diagram showing the relationship between the angle θ of an interface of joining sections and a maximum electric field strength at the interface;
FIG. 48 is a characteristic diagram showing an example of the effects, on the insulation characteristic, of a silane coupling treatment applied to ceramic;
FIG. 49 is a characteristic diagram showing an example of insulation characteristic of an epoxy resin observed if various fillers are used;
FIG. 50 is a side sectional view showing an example of a sample;
FIG. 51 is a right side view showing an example of configuration of an air insulating switch gear; and
FIG. 52 is a right side view of configuration of a cubicle type SF₆ gas insulating switch gear.

Embodiments of the present invention will be described below in detail with reference to the drawings. In the figures below, the same parts are denoted by the same reference numerals. Their description is thus omitted.

### (First Embodiment)

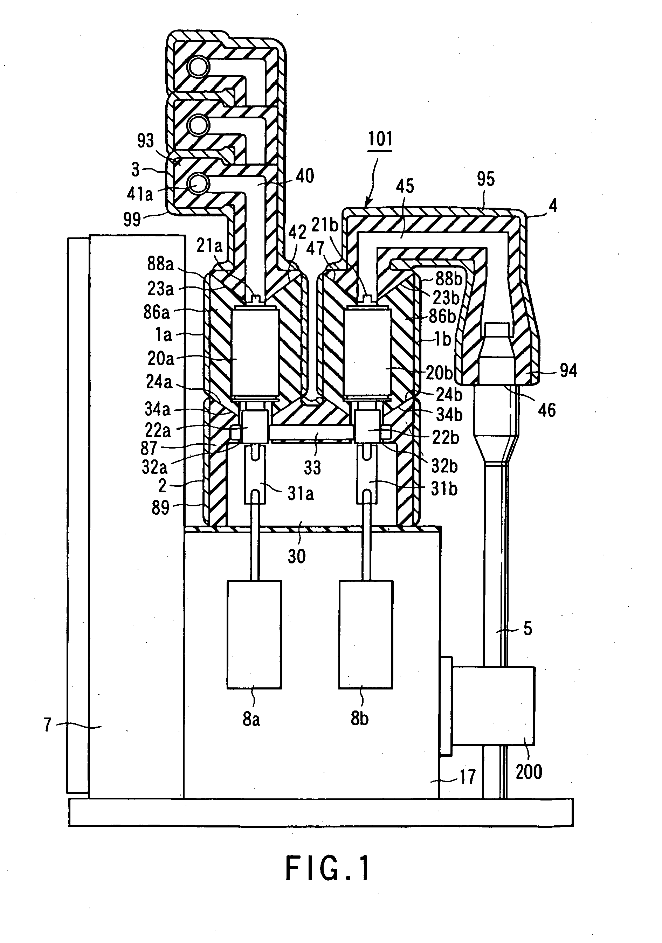

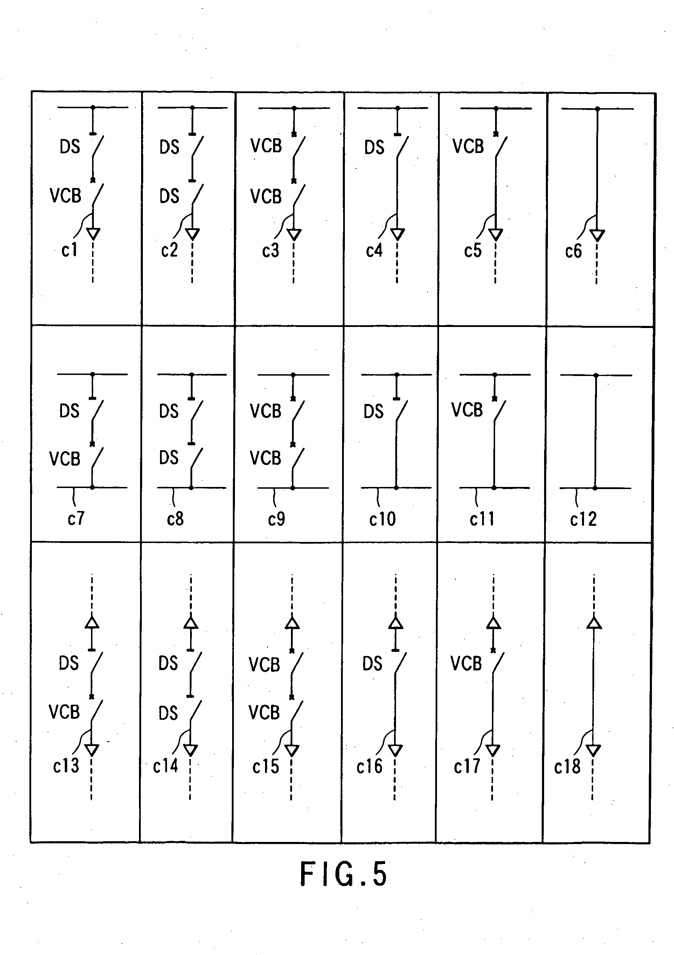

FIGS. 1 to 4 are side sectional views showing a first to fourth examples of configurations of a switch gear according to the present embodiment. FIG. 5 is a diagram showing the first example of electric circuits composed of the switch gear according to the present embodiment.

A switch gear 101 in FIG. 1 is a closed switch gear constituting an electric circuit c1, shown in FIG. 5.

A main circuit section of the switch gear 101 is covered with a thermosetting solid insulator such as epoxy.

The switch gear 101 is constituted by joining a plurality of components (for example, solid insulating equipments or solid mold equipments) together in a vertical direction.

Each component respectively comprises pieces of switch gear constituting equipment (such as parts used for switching operations), an insulating section to insulate the pieces of switch gear constituting equipment, a joining section to join the pieces of switch gear equipment included in the other components to the pieces of switch gear constituting equipment included in this component, in the vertical direction so as to link all these pieces together, and a ground layer provided on the surface of the insulating section and not on the surface of the joining section.

The pieces of switch gear constituting equipment include, for example, vacuum valves 20a and 20b, a conductor 33, a bus connecting conductor 40, and a main circuit connecting conductor 45.

The switching gear 101 is not affected by the environment in which pieces of main circuit constituting equipment and conductors connecting the pieces of main circuit constituting equipment together are installed. The size of the switch gear is reduced to the minimum value required for electric insulation. The switch gear 101 is also standardized to correspond to various circuit configurations. The number of parts required can thus be reduced. Accordingly, the switching gear 101 is safer and more reliable.

The switch gear 101 comprises, as components, valve mold sections 1a and 1b as switching equipment, a valve moving mold section 2, a bus connecting mold section 3, a main circuit connecting mold section 4, and a control box 7.

The valve mold section 1a comprises a vacuum valve 20a, an insulating section 86a, joining sections 23a and 24a, and a ground layer 88a.

The vacuum valve 20a is a disconnecting switch section. The insulating section 86a is a solid insulator that covers the vacuum valve 20a. The joining section 23a is used to join a fixed side of the vacuum valve 20a. The joining section 24a is used to join a movable side of the vacuum valve 20a. The ground layer 88a is not provided on the joining sections 23a and 24a but on the surface of the insulating section 86a.

The joining sections 23a and 24a may be fitting sections that are fitted and connected to, for example, other joining sections. This also applies to the other joining sections.

The valve mold section 1b comprises a vacuum valve 20b, an insulating section 86b, joining sections 23b and 24b, and a ground layer 88b.

The vacuum valve 20b is a circuit breaking section. The insulating section 86b, joining sections 23b and 24b, and ground layer 88b of the valve mold section 1b are similar to the insulating section 86a, joining sections 23a and 24a, and ground layer 88a of the valve mold section 1a. Their description is thus omitted.

The valve movable side mold section 2 comprises a plurality of joining sections 34a and 34b, a conductor 33, an insulating section 87, and a ground layer 89.

In the present embodiment, the two joining sections 34a and 34b are provided in the valve movable side mold section 2. However, three or more joining sections may be provided in the valve movable side mold section 2.

The joining sections 34a and 34b are used to join the conductor 33. In the present embodiment, the valve mold section 1a and 1b and the valve movable side mold section 2 are joined together by joining the joining sections 34a and 24a together and joining the joining sections 34b and 24b together. The joining sections may be connected together via a solid insulator such as rubber which has a small elastic modulus.

The conductor 33 connects the joining sections 34a and 34b together and comprises slidable conducting sections 32a and 32b.

The conductor 33 is electrically connected to the movable side conductor 22a of the vacuum valve 20a if the joining section 34a is joined to the joining section 24a of the valve mold section 1a.

On the other hand, the conductor 33 is electrically connected to the movable side conductor 22b of the vacuum valve 20b if the joining section 34b is joined to the joining section 24b of the valve mold section 1b.

The insulating section 87 is a solid insulator that covers the conductor 33 and comprises the joining sections 34a and 34b on its top surface. Further, the bottom surface of the insulating section 87 is concave and has a hole 30 (opening) formed in itself.

The ground layer 89 is provided on the surface of the insulating section 87 but not on the inner surface of the hole 30 or on the joining sections 34a and 34b.

The hole 30 in the valve movable side mold section 2 is closed. An insulating medium consisting of a gas such as air is sealed into the closed hole 30.

The valve movable side mold section 2 houses the insulating operating rod 31a, connected to the movable side conductor 22a of the vacuum valve 20a, in the closed hole 30 if the joining section 24a of the valve mold section 1a is joined to the joining section 34a.

The valve movable side mold section 2 houses the insulating operating rod 31b, connected to the movable side conductor 22b of the vacuum valve 20b, in the closed hole 30 if the joining section 24b of the valve mold section 1b is joined to the joining section 34b.

One end of each of the insulating operating rods 31a and 31b is connected to the corresponding one of the movable side conductors 22a and 22b as described above. The other end of each of the insulating operating rods 31a and 31b is connected to the corresponding one of the operating mechanisms 8a and 8b. The disconnecting switch section and the circuit breaking section are opened and closed by operating the operating mechanisms 8a and 8b.

The disconnecting switch section and the circuit breaking section can be electrically connected together and can slide freely when the slidable conducting sections 32a and 32b, provided in the conductor 33 disposed inside the valve movable side mold section 2, come into contact with the movable side conductors 22a and 22b of the vacuum valves 20a and 20b, respectively.

The bus connecting mold section 3 comprises a bus connecting conductor 40, an insulating section 93, joining sections 41a, 41b, and 42, and a ground layer 99.

The bus connecting conductor 40 has three connecting ends. The bus connecting conductor 40 may have more connecting ends. The first and second connecting ends are located opposite each other and have the same central axis. These connecting ends are used to connect to the bus. The third connecting end is used to connect to the vacuum valve.

The bus connecting conductor 40 comprises a bar-like conductor and an L-shaped conductor one end of which is connected to substantially the middle of the bar-like conductor.

The insulating section 93 is a solid insulator that covers the bus connecting conductor 40.

The joining section 41a is used to join the first connecting end. The joining section 41b is used to join the second connecting end. The joining section 42 is used to join the third connecting end.

In the present embodiment, the joining sections 41a and 41b have the same central axis. In FIG. 1, the joining section 41a is illustrated. However, the joining section 41b is not illustrated because it is opposite the joining section 41a.

The central axis of the joining section 42 does not cross the central axis of the joining sections 41a and 41b.

The ground layer 99 is provided on the surface of the insulating section 93 but not on the joining sections 41a, 41b, and 42.

The main circuit connecting mold section 4 comprises a main circuit connecting conductor 45, an insulating section 94, a main circuit external lead-in cable joining section 46, a joining section 47, and a ground layer 95.

The main circuit connecting conductor 45 has two connecting ends. The bus connecting conductor 40 may have three or more connecting ends.

The insulating section 94 is a solid insulator that covers the main circuit connecting conductor 45.

The main circuit external lead-in cable joining section 46 is used to join the first connecting end of the main circuit connecting conductor 45.

The joining section 47 is used to join the second connecting end of the main circuit connecting conductor 45.

The ground layer 95 is provided on the surface of the insulating section 94 but not on the joining sections 46 and 47.

The fixed side joining section 23a of the valve mold section 1a for t disconnecting switch is joined to the joining section 42 of the bus connecting mold section 3. The fixed side joining section 23a is also connected to an adjacent board via a bus (not shown) attached to the bus connecting joining sections 41a and 41b.

The fixed side joining section 23b of the valve mold section 1b for a circuit breaker is joined to the joining section 47 of the main circuit connecting mold section 4. The fixed side joining section 23b is also connected to an external main circuit via the cable attached to the main circuit external lead-in cable joining section 46.

Although not shown in the electric circuit c1 in FIG. 5, described above, the cable 5 is provided with a through-type current transformer 200.

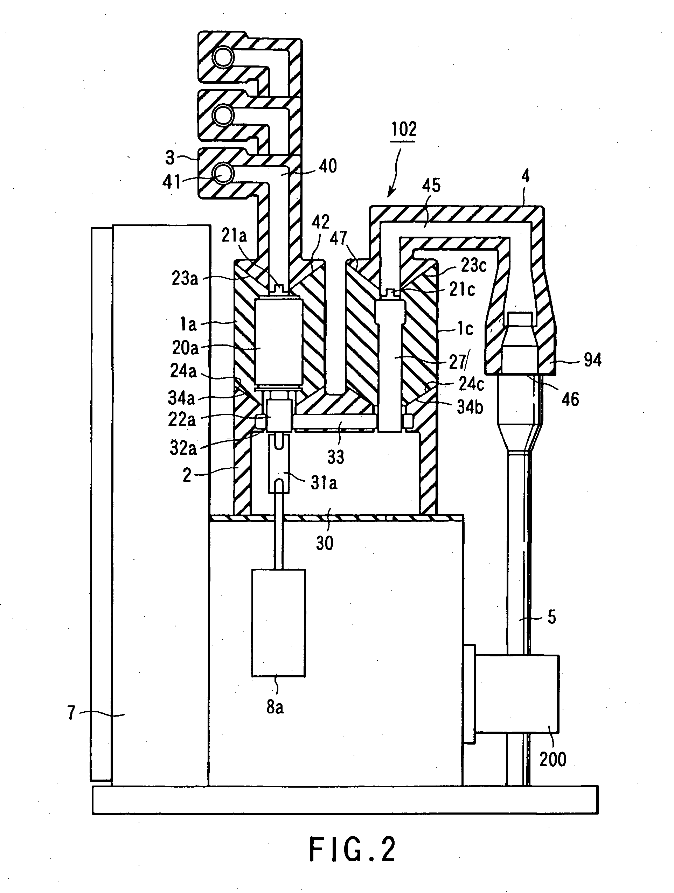

A switch gear 102 in FIG. 2 is a closed switch gear constituting an electric circuit c2 in FIG. 5. In FIG. 2, the ground layer provided on the insulating section of each component is omitted. The configuration of this switch gear is simplified in the figure. This also applies to the other figures.

The switch gear 102 is similar to the above described switch gear 101 but is characterized by comprising a valve mold section 1c in place of the valve mold section 1b.

The valve mold section 1c comprises a conductor 27 in place of the circuit breaker vacuum valve 20b in the valve mold section 1b.

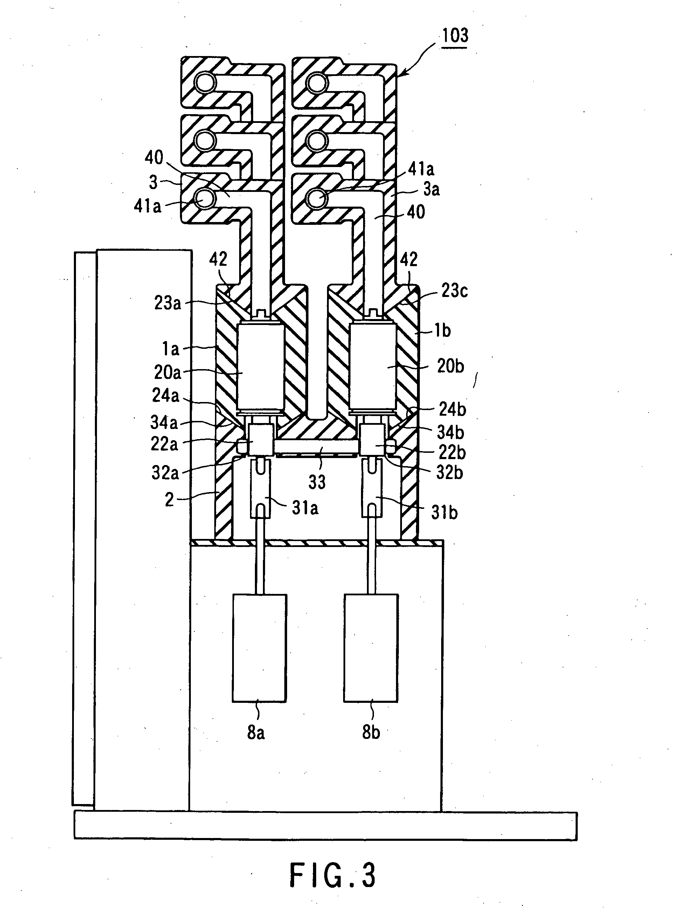

A switch gear 103 in FIG. 3 is a closed switch gear constituting an electric circuit c7 in FIG. 5.

The switch gear 103 is similar to the above described switch gear 101 but comprises, in place of the main circuit connecting mold section 4, a bus connecting mold section 3a connected to the fixed side of the valve mold section 1b. The bus connecting mold section 3a is similar to the bus connecting mold section 3.

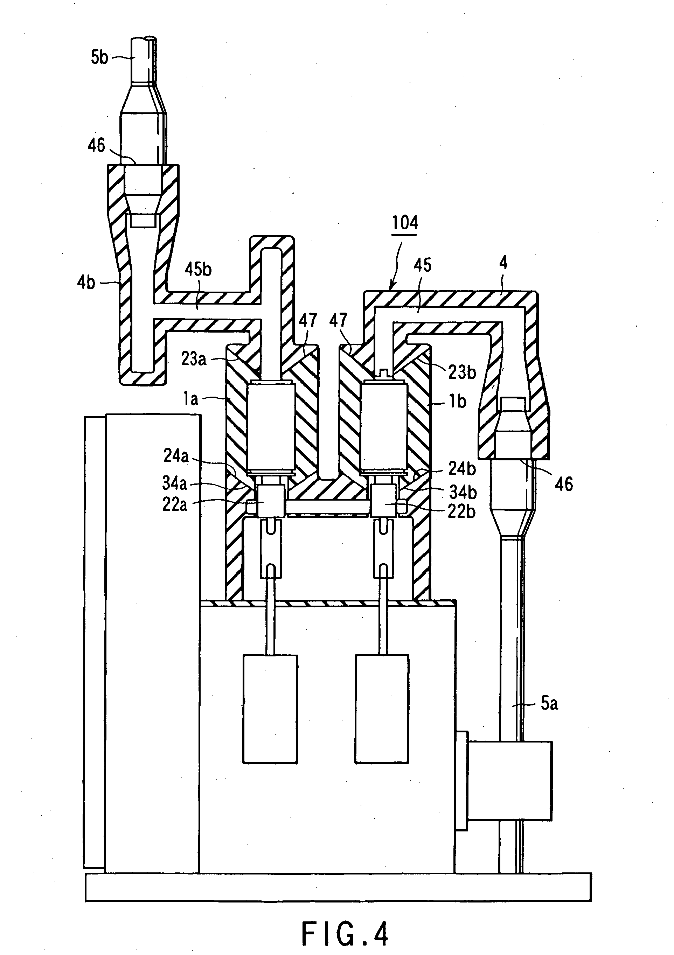

A switch gear 104 in FIG. 4 is a closed switch gear constituting an electric circuit c13 in FIG. 5.

The switch gear 104 is similar to the above described switch gear 101 but comprises, in place of the bus connecting mold section 3, a main circuit connecting mold section 4b connected to the fixed side of the valve mold section 1a.

The main circuit connecting mold section 4b and the main circuit connecting mold section 4 are similar except that a main circuit connecting conductor 45b and the main circuit connecting conductor 45 have different shapes. The main circuit connecting conductor 45 has four ends.

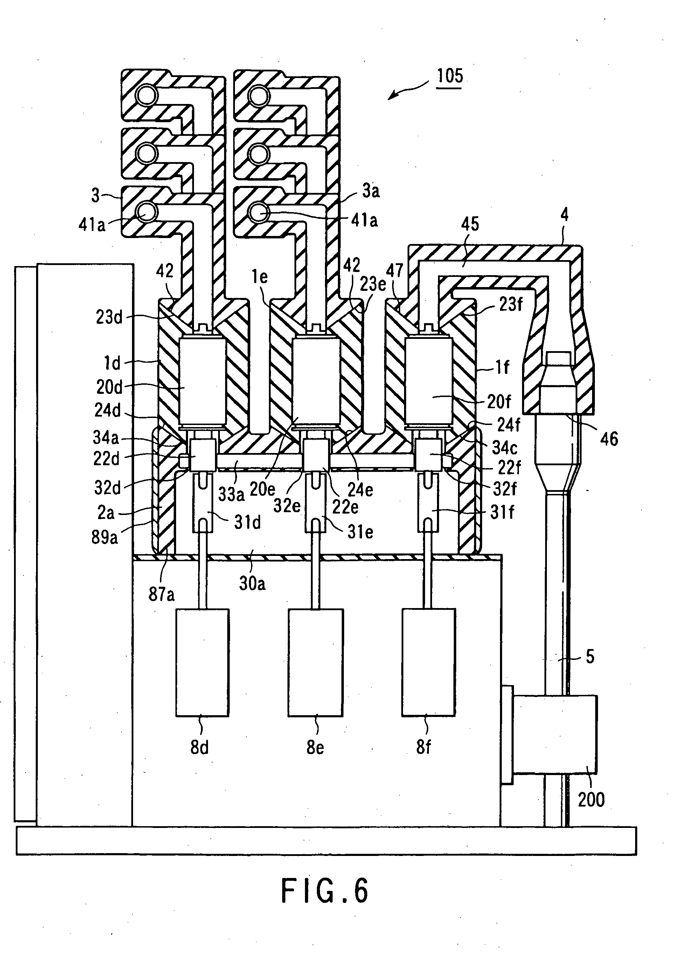

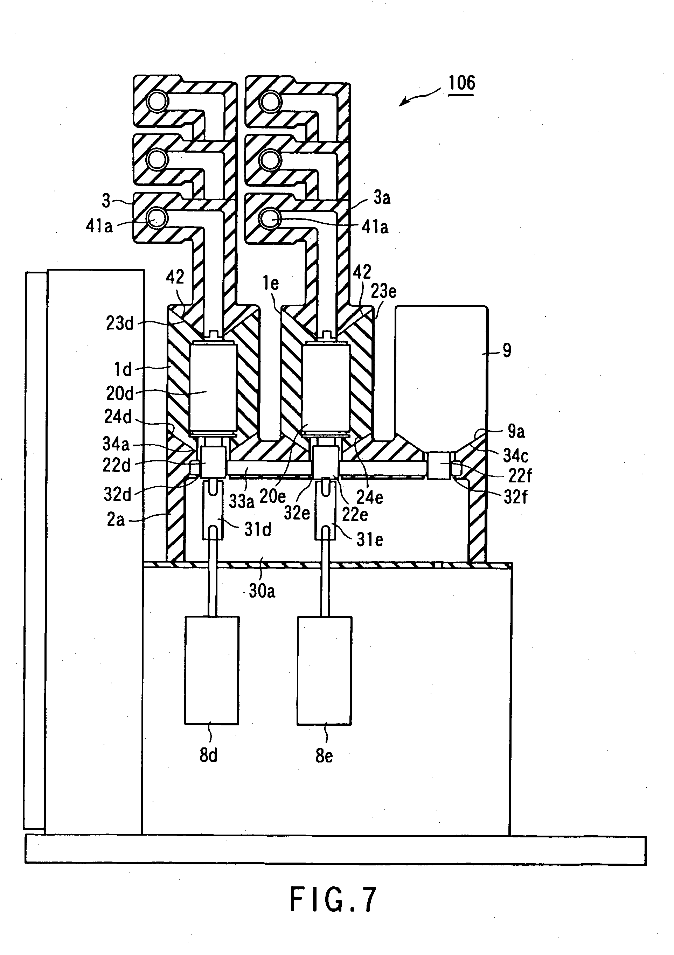

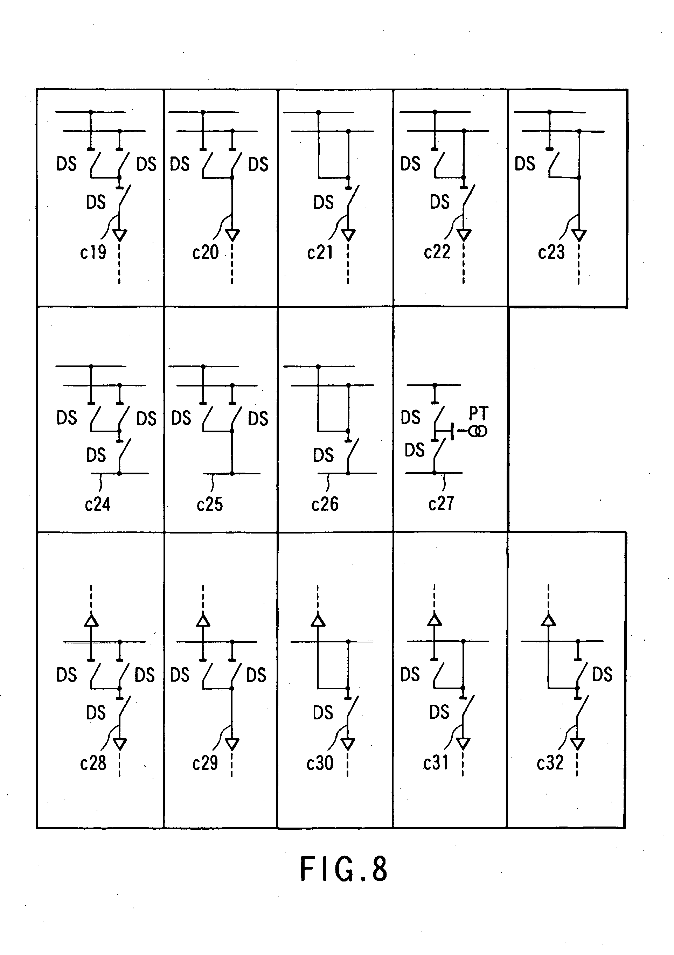

FIGS. 6 and 7 are side sectional views showing a fifth and sixth examples of configurations of the switch gear according to the present embodiment. FIG. 8 shows the second example of electric circuits composed of the switch gear according to the present embodiment.

A switch gear 105 in FIG. 6 is a closed switch gear constituting an electric circuit c19 in FIG. 8.

A valve movable side mold section 2a of the switch gear 105 comprises joining sections 34a to 34c on the top surface of an insulating section 87a. A ground layer 89a is not provided on the joining sections 34a to 34c.

The joining sections 34a to 34c are joined to movable side joining sections 24d to 24f of disconnecting switch valve mold sections 1d to 1f, respectively. The valve mold sections 1d to 1f are similar to the valve mold section 1a.

The joining sections 42 of the bus connecting mold sections 3 and 3a are joined to fixed side joining sections 23d and 23e of the valve mold sections 1d and 1e.

The bus connecting joining sections 41a and 41b of the bus connecting mold sections 3 and 3a are connected to respective buses (not shown).

The joining section 47 of the main circuit connecting mold section 4 is joined to the fixed side joining section 23f of the valve mold section 1f. Thus, the fixed side joining section 23f is connected to the cable 5 via the main circuit connecting mold section 4.

One end of each insulating operating rod 31d to 31f is connected to a corresponding movable side conductor 22d to 22f of a corresponding vacuum valve 20d to 20f provided in the corresponding valve mold section 1d to 1f. An operating mechanism 8d to 8f is connected to the other end of the corresponding one of the insulating operating rods 31d to 31f. The insulating operating rods 31d to 31f are provided in a closed hole 30a in the valve movable side mold section 2a. The disconnecting switch section is opened and closed by operating the operating mechanisms 8d to 8f. A conductor 33a connects joining sections 34d to 34f together'and comprises slidable conducting sections 32d to 32f.

A switch gear 106 in FIG. 7 is a closed switch gear constituting an electric circuit c27 in FIG. 8.

The switch gear 106 is similar to the above described switch gear 105. However, in place of the valve mold section 1f, an instrument transformer 9 is connected to the switch gear 106.

The surface of the instrument transformer 9 is covered with a solid insulator. A joining section 9a of the instrument transformer 9 is used to join to another component. The joining section 9a of the instrument transformer 9 is not provided with any ground layers. On the other hand, a ground layer is provided on the surface of the solid insulator except for the joining section 9a.

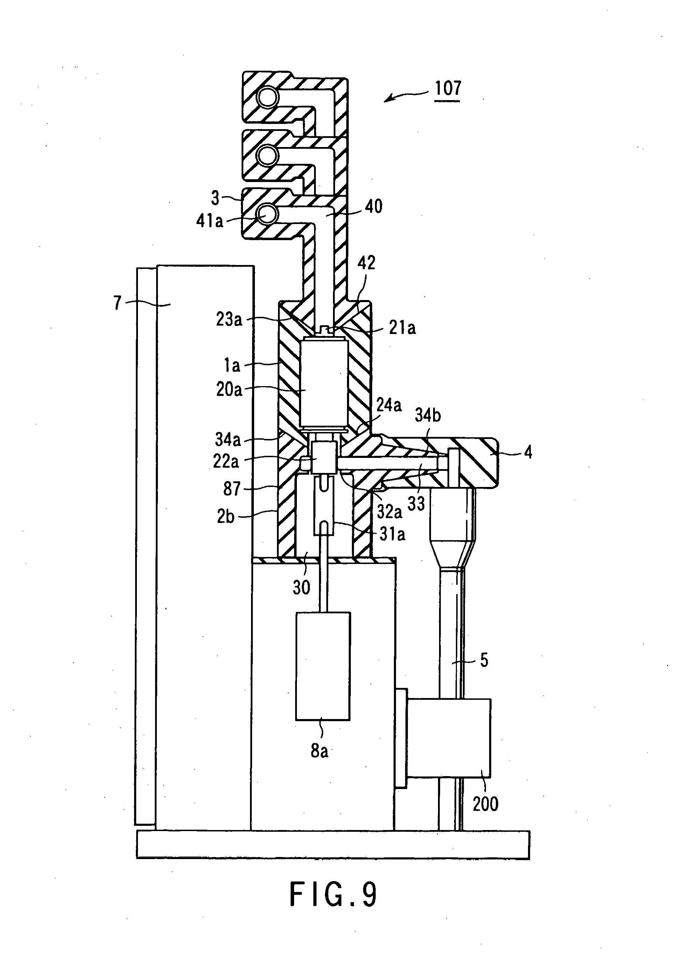

In the present embodiment, for example, the closed switch gear may be configured as shown in FIGS. 9 to 11.

A valve movable side mold section 2b of a switch gear 107 in FIG. 9 is similar to the valve movable side mold section 2. However, the joining section 34b is provided on a side of the insulating section 87.

The valve mold section 1a is joined to the joining section 34a of the valve movable side mold section 2b. The main circuit connecting mold section 4 is joined to the joining section 34b. The switch gear 107 may comprises the valve mold section 1b instead of the valve mold section 1a.

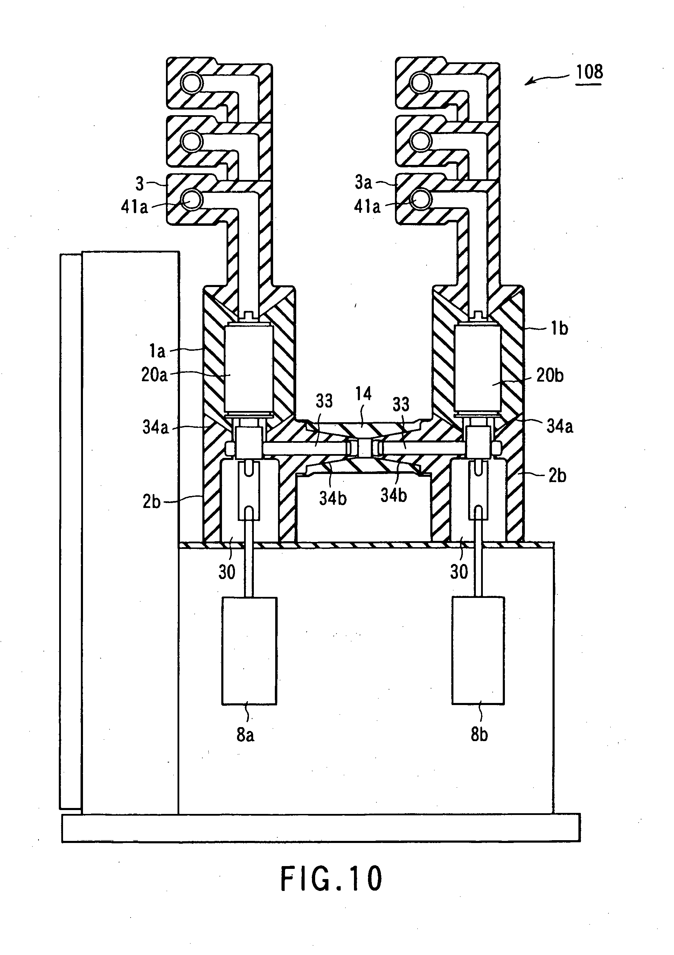

A switch gear 108 in FIG. 10 comprises two of the valve movable side mold section 2b of the above described switch gear 107. In the switch gear 108, the two valve movable side mold sections 2b are disposed so that their joining sections 34a lie opposite each other. The two opposite joining sections 34a are connected together via an equipment connecting mold section 14.

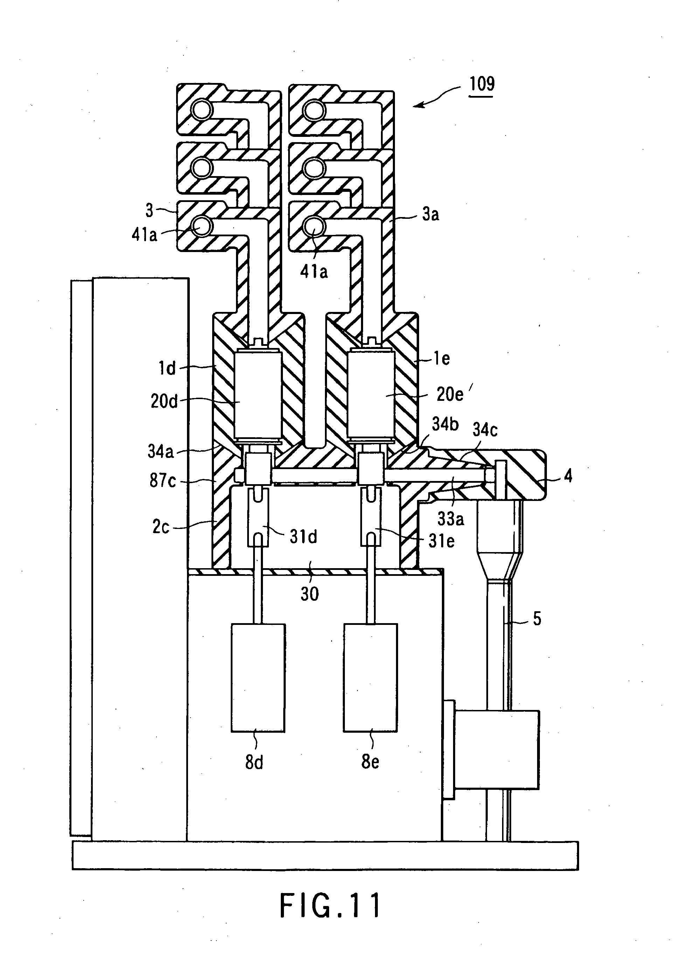

A valve movable side mold section 2c of a switch gear 109 in FIG. 11 comprises the joining sections 34a and 34b on the top surface of an insulating section 87c. The valve mold section 1d is joined to the joining section 43a. The valve mold section 1e is joined to the joining section 43b. The main circuit connecting mold section 4 is joined to a joining section 34c.

In the switch gears 107 to 109 in FIGS. 9 to 11, respectively, the main circuit connecting mold section 4 may be connected to the fixed side of the valve mold section 1a or 1b as required.

Further, in the switch gears 101 to 109, the disconnecting switch valve mold section 1a, the circuit breaker valve mold section 1b conduction-only valve mold section 1c, and the instrument transformer 9 may be changed as required for the configuration of the system.

Furthermore, the switch gears 101 to 109 may include a valve mold section comprising a vacuum valve that operates so that the single valve can perform two-position operations for circuit breaking and disconnection or three-position operations for circuit breaking, disconnection, and grounding.

In the description of the present embodiment, the disconnecting switch is of a vacuum type that uses a vacuum valve. However, the insulating medium sealed into the insulating container is not limited to a vacuum. Other insulating media such as air and oxygen may be used or a pressurized gas may be applied by increasing the pressure inside the container above the atmospheric pressure.

In the present embodiment, the switch gear 101 to 109 is applied to a three-phase circuit. However, it may be applied to a single-phase circuit.

In the above described switch gears 101 to 109, the components are connected together in the vertical direction. Consequently, the weights of the components act on the joining sections, thus enabling the components to be stably joined together.

Further, the dielectric strength of the solid insulator is larger than that of air or an SF₆ gas under the atmospheric pressure by one order of magnitude. Accordingly, in the switch gears 101 to 109, it is possible to drastically reduce the insulation distance between the ground and the vacuum valve, the main section of the switch gear. This enables the reduction of size of the entire switch gear.

In three-phase equipment, a ground layer is provided on the surface of a solid insulator in which a main circuit section is molded for each phase. Accordingly, the equipment is separated into three phases. It is thus unnecessary to consider an inter-phase short circuit, thus eliminating the need for an inter-phase insulation distance. Therefore, the inter-phase distance can be sharply reduced.

With the switch gears 101 to 109, the amount of feasible applied circuits can be sharply increased by simply altering the valve mold section joined to the joining section of the valve movable side mold section, according to a circuit configuration.

In the switch gears 101 to 109, the valve mold section is separated from the valve movable side mold section. Then, the joining sections provided in the valve mold section are mechanically and electrically connected to the joining sections provided in the valve movable side mold section.

The switch gears 101 to 109 can be made compatible with various circuit configurations by simply adapting the valve mold section for a disconnecting switch, a circuit breaker, conduction, an instrument transformer, or the like without altering the valve movable side mold section, for example, as shown in FIGS. 5 and 8, described above.

FIG. 8, described above, shows only the disconnecting switch (DS). However, a circuit for a circuit breaker (VCB) can be constructed by replacing the components for a disconnecting switch with components for a circuit breaker. It is also possible to construct a circuit for a combination of a DCB with a DS.

Further, the switch gears 101 to 109 do not require any large-scale airtight containers as in the case with the above described SF₆ gas insulating switch gear. Accordingly, the number of parts required can be drastically reduced. This enables an inexpensive and reliable switch gear to be realized.

### (Second Embodiment)

In the above described first embodiment, the plurality of joining sections 34a and 34b, provided in the valve movable side mold section are disposed in substantially the same direction. Further, the plurality of joining sections 34a and 34b are arranged on a surface opposite to the hole surface of the insulating section of the valve movable side mold section.

Thus, various valve mold sections can be installed in the valve movable side mold section in the same direction.

Further, since the surface of the valve mold section is provided with ground layer, the distance between the valve molds can be reduced.

The insulating operating rods are connected to between the operating mechanism and the vacuum valve in order to drive the vacuum valve. They are arranged in the closed hole in the valve movable side mold section. The insulating operating rods perform driving operations parallel with one another in the same direction. Accordingly, the size of the valve movable side mold section can be reduced. This enables the reduction of size of a space for an operation chamber 17 in which the operating mechanism is installed. Thus, the entire switch gear can be miniaturized.

In the above described first embodiment, various circuit configurations can be implemented by simply altering components such as the valve mold section, bus connecting mold section, and main circuit connecting mold section which are joined to the joining section of the valve movable side mold section, without altering the valve movable side mold section.

This sharply increases the amount of configurable applied circuits. Further, in spite of an increase in the amount of applied circuits, the types of components can be reduced. Required parts can thus be standardized. Furthermore, if switch gears are configured in parallel board form, it is possible to increase the number of circuits that can be constructed within one board. As a result, the size of the entire switch gear can be reduced.

Moreover, it is possible to reduce the number of molds required to produce the components. This is advantageous in production. As a result, an expensive and reliable switch gear can be realized.

### (Third Embodiment)

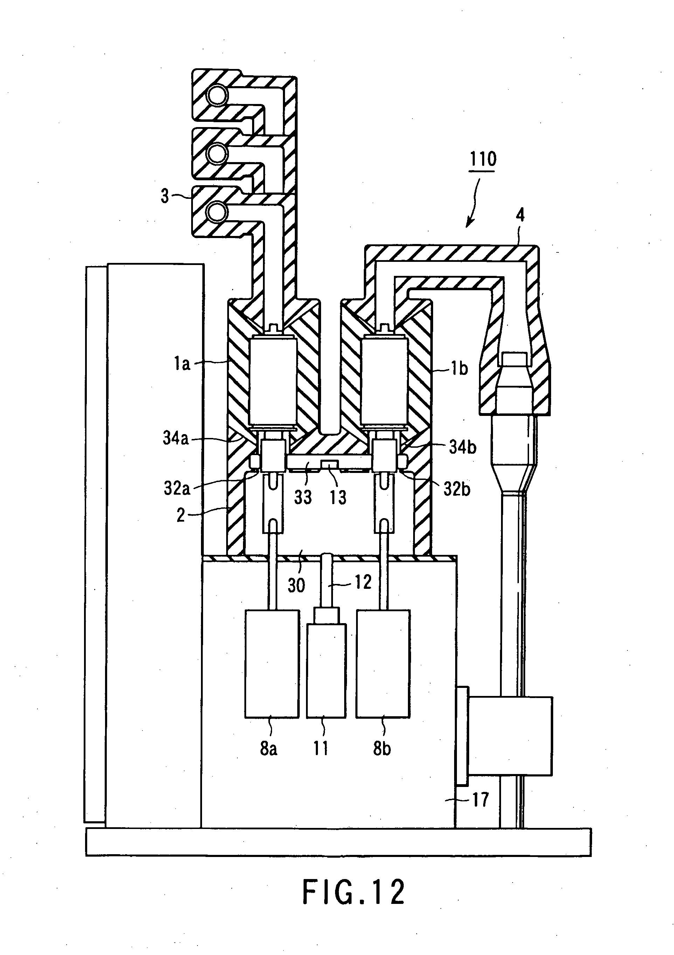

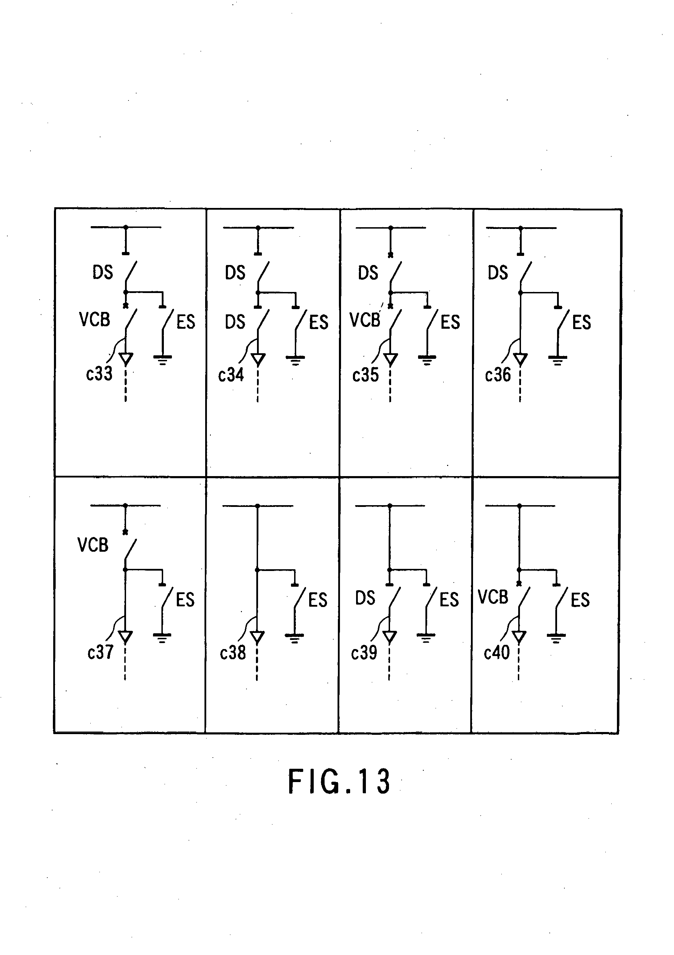

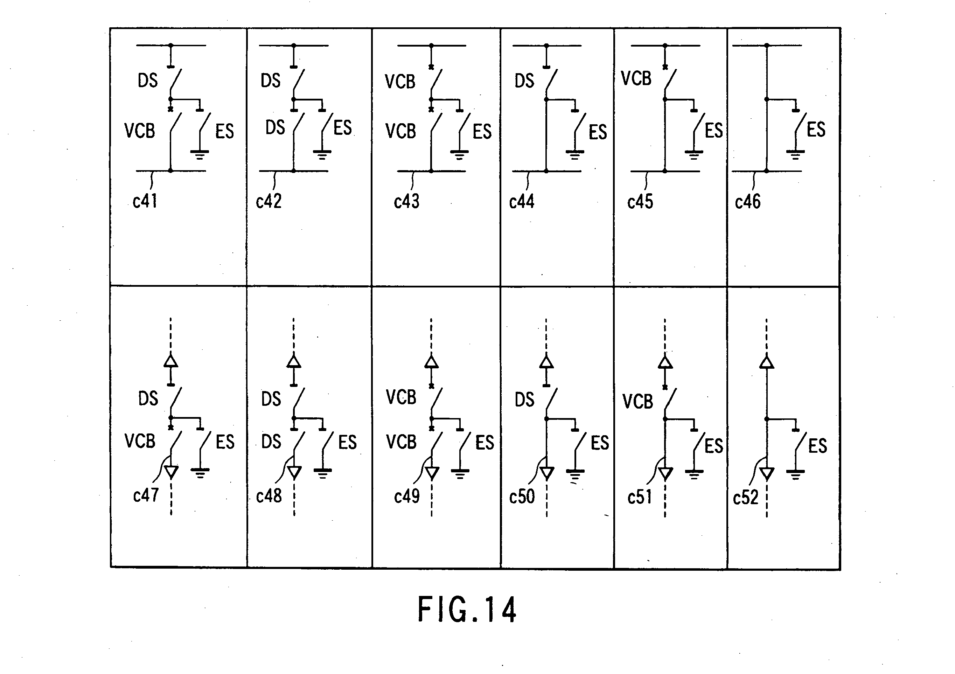

FIG. 12 is a side sectional view showing an example of configuration of a closed switch gear according to the present embodiment. FIGS. 13 to 15 are diagrams showing examples of electric circuits composed of the switch gear according to the present embodiment.

A switch gear 110 in FIG. 12 is a closed switch gear constituting an electric circuit c33, shown in FIG. 13.

In the switch gear 110, a contactor 13 is provided in the conductor 33 connecting the joining sections 34a and 34b together of the valve movable side mold section 2. The contactor 13 is located on the surface of the valve movable side mold section 2 in which the closed hole 30 is formed.

The operation chamber 17 is provided with a ground device operating mechanism 11. One end of a movable conductor 12 is grounded. The movable conductor 12 is driven by the ground device operating mechanism 11. The other end of the movable conductor 12 contacts with or separates from the contactor 13.

In the switch gear 110, the conductor 33 is provided with the contactor 13. A ground device is provided to ground the conductor 33. Thus, the amount of configurable electric circuits can be increased without increasing the number of components as shown in FIGS. 13 to 15.

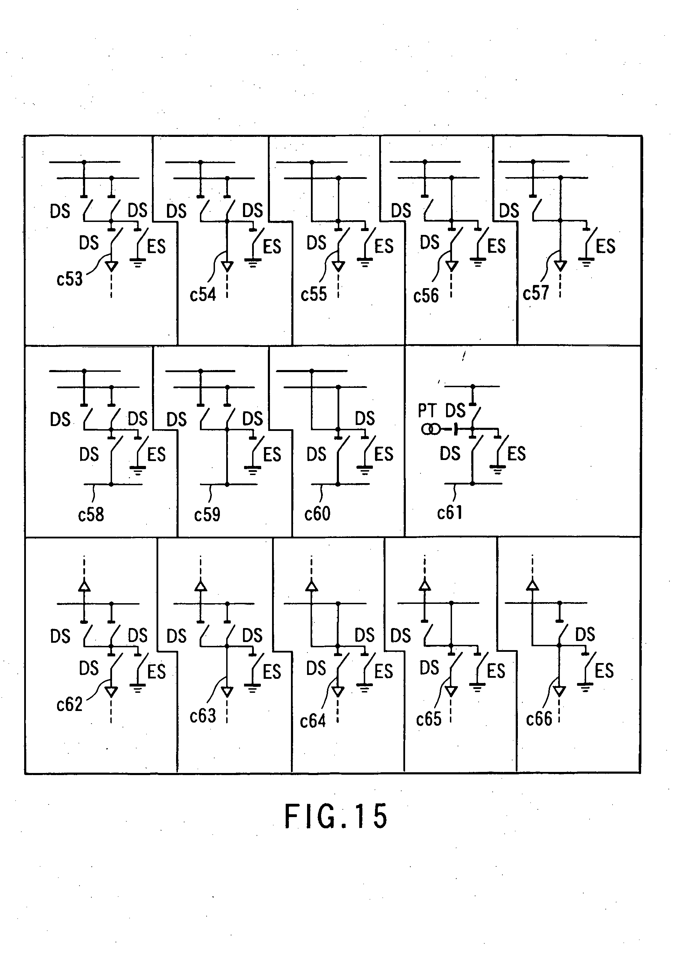

FIG. 15, described above, shows only the disconnecting switch (DS). However, a circuit for a circuit breaker (VCB) can be constructed by replacing the components for a disconnecting switch with components for a circuit breaker. It is also possible to construct a circuit for a combination of a DCB with a DS.

Further, by providing the contactor 13 on the surface of the valve movable side mold section 2 in which the closed hole 30 is formed, the ground device can be arranged in the same operation chamber 17 in which the main circuit operating mechanisms 8a and 8b are installed to drive the vacuum valve. Consequently, only one space is required to dispose the mechanism section. This enables the switch gear to be miniaturized.

### (Fourth Embodiment)

In the first embodiment, the insulating medium consisting of a gas such as air is sealed into the closed hole 30. This prevents the adverse effects of an external environment and enables the size of the valve movable side mold section 2 to be reduced.

Further, the whole main circuit high-voltage section is prevented from being exposed to the open air. Since the surface of the insulating section, which covers the main circuit, is provided with the ground layer, the switch gear is prevented from being affected by an external environment such as contamination or humidity. Therefore, the switch gear can be miniaturized and made more reliable.

### (Fifth Embodiment)

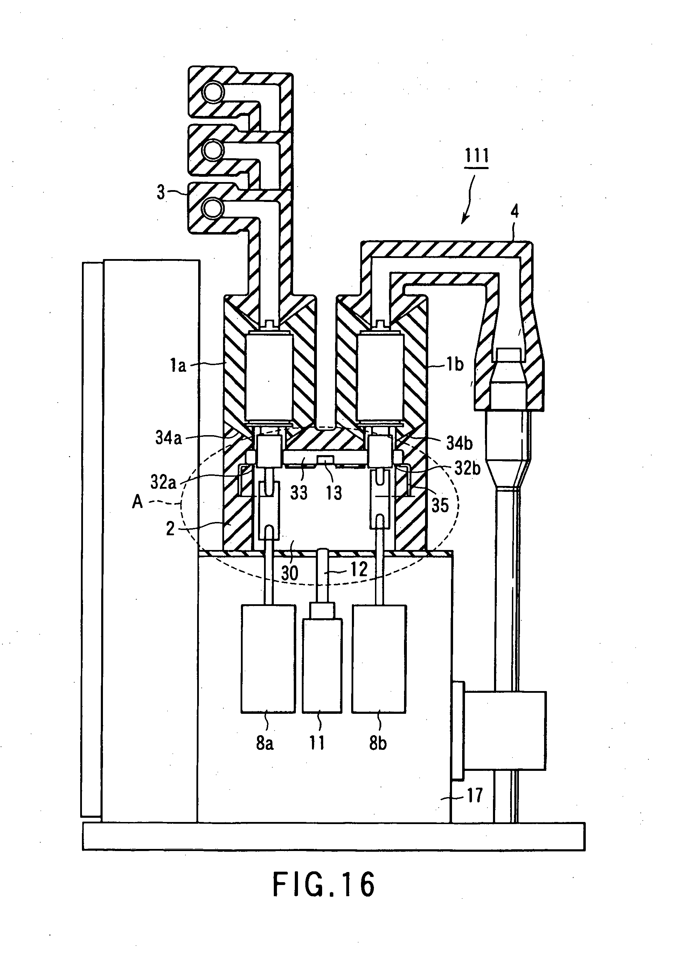

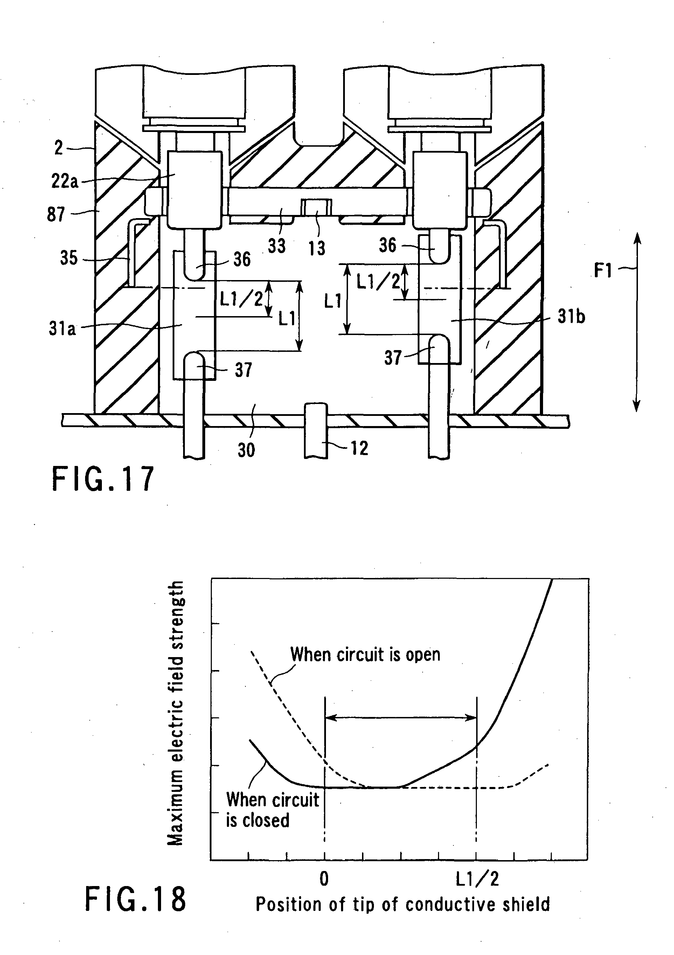

FIG. 16 is a side sectional view showing an example of configuration of a closed switch gear according to the present embodiment. FIG. 17 is an enlarged view of a section A of FIG. 16.

In a switch gear 111 in FIGS. 16 and 17, a conductive shield 35 is embedded in the insulating section 87 of the valve movable side mold section 2 so as to surround the hole 30. The conductive shield 35 is at substantially the same potential as the conductor 32.

The tip of embedding metal (electrode) 36 extends from the movable side conductor 22a of the vacuum valve 20a and is embedded in the insulating operating rod 31a.

The tip of embedding metal 37 extends from the side opposite to the movable side conductor 22a of the vacuum valve 20a and is embedded in the insulating operating rod 31a.

The embedding metals 36 and 37 are also embedded in the insulating operating rod 31b as in the case with the insulating operating rod 31a.

A distance L1 is between the tips of the embedding metals 36 and 37 in the axial direction F1 of the insulating operating rods 31a and 31b. In the present embodiment, the axial direction F1 of the insulating operating rods 31a and 31b is similar to the direction in which the vacuum valves 20a and 20b move and the axial direction of the vacuum valves 20a and 20b.

The tip of the conductive shield which is closer to the bottom surface of the switch gear is located, in the axial direction F1 of the insulating operating rods 31a and 31b, closer to the movable side conductors 22a and 22b than to a position halfway between the tips of the embedding metals 36 and 37.

That is, the bottom surface side tip of the conductive shield 35 is located substantially within a distance L1/2 from the tip of the embedding metal 36 whether the vacuum valves 20a and 20b are positioned to open or close the circuit.

Even if the vacuum valves 20a and 20b move between three positions for closing, opening, and disconnecting the circuit, respectively, the bottom surface side tip of the conductive shield 35 is located substantially within a distance L1/2 from the tip of the embedding metal 36 whether the vacuum valves 20a and 20b are positioned to open, close, or disconnect the circuit.

In the switch gear 111, the insulating operating rods 31a and 31b, disposed in the hole 30 in the valve movable side mold section 2, and the movable side conductors 22a and 22b of the vacuum valves 20a and 20b, projecting from the conductor 33 into the hole 30, are moved in the axial direction by operating the vacuum valves 20a and 20b. Thus, the distribution of electric fields in the hole 30 varies.

FIG. 18 is a chart showing the relationship between the position of the bottom surface side tip of the conductive shield 35 and the maximum electric field strength in the hole 30 in the valve movable side mold section 2. The solid line in FIG. 18 indicates the case in which the vacuum valves 20a and 20b are positioned to close the circuit. The broken line indicates the case in which the vacuum valves 20a and 20b are positioned to open the circuit. The axis of abscissas in FIG. 18 indicates the position of tip of the embedding metal 36. The number 0 indicates the position of tip of the embedding metal 36 which is closer to the movable side conductors 22a and 22b. The distance L1 is between the embedding metals 36 and 37 of the insulating operating rods 31a and 31b, respectively.

As shown in FIG. 18, while the circuit is closed, when the tip of the conductive shield 35 is positioned closer to the grounded bottom surface than to a position L1/2, the maximum electric field strength in the hole 30 increases rapidly.

On the other hand, while the circuit is open, when the tip of the conductive shield 35 is positioned closer to the movable side conductors 33a and 33b than to the position 0, the maximum electric field strength in the hole 30 increases rapidly.

Consequently, when the bottom surface side position of the conductive shield 35 is set within the distance L1/2 from the position 0 of the embedding metal 36 closer to the movable side conductors 22a and 22b, the maximum electric field strength in the hole 30 remains substantially the same whether or not the circuit is closed or open. Consequently, the electric field strength can be reduced.

Further, the maximum field portion of configuration of the switch gear 111 is located along the insulating section 87. Accordingly, compared to discharge from the metal electrode, initial electrons from which discharge occurs are suppressed. This improves a withstanding voltage.

It is thus possible to reduce the creepage distance of insulation inside the hole 30 in the valve movable side mold section 2 which is not provided with the ground layer 89 and the creepage distance of insulation of the insulating operating rods 31a and 31b. This enables the switch gear to be miniaturized.

### (Sixth Embodiment)

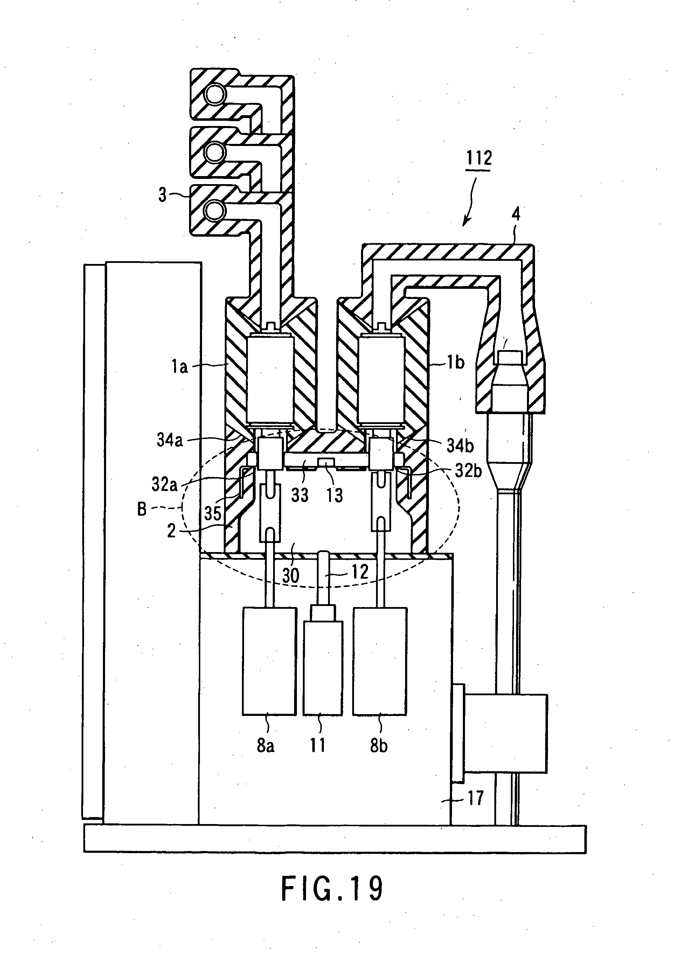

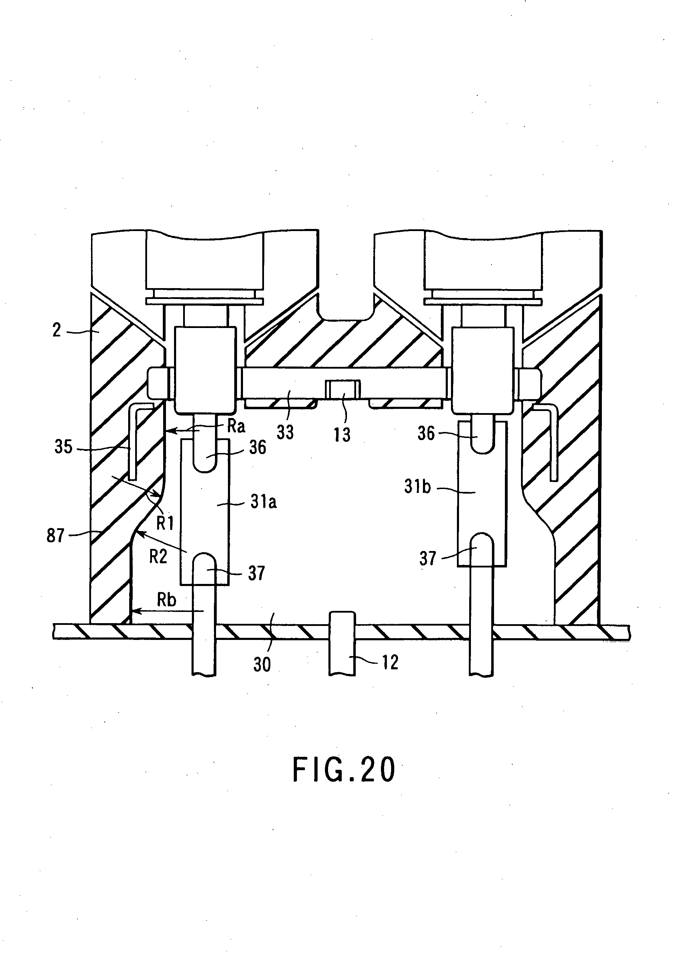

FIG. 19 is a side sectional view showing an example of configuration of a closed switch gear according to the present embodiment. FIG. 20 is an enlarged view of a section B of FIG. 19.

A switch gear 112 in FIGS. 19 and 20 is similar to the above described switch gear 111 but is characterized in the shapes of the insulating section 87 and the hole 30.

The insulating section 87 and the hole 30 are formed so that at the side of the hole, the distance Ra between the portion of the insulating section 87 in which the conductive shield 35 is embedded and the central axis of each of the insulating operating rods 31a and 31b is smaller than the distance Rb between the grounded bottom surface side portion of the insulating portion 87 in which the conductive shield 35 is not embedded and the central axis of the insulating operating rod 31a or 31b.

Between the portion in which the conductive shield 35 is embedded and the grounded bottom surface side in which the conductive shield is not embedded, a variation in the distance between the side of the hole 30 and the central axis of the insulating operating rod 31a or 31b is continuous. Accordingly, the side of the hole 30 does not contain any surfaces parallel with the bottom surface.

That is, in the side sectional view in FIG. 20, the inter-axis distance Ra portion and the inter-axis distance Rb portion are joined together by a curve with a radius of curvature R1 and a curve with a radius of curvature R2.

A straight portion may be present in the junction between the curve with the radius of curvature R1 and the curve with the radius of curvature R2 unless the junction has a straight portion parallel with the grounded bottom surface.

In the switch gear 112 according to the present embodiment, the insulating section 87 and the hole 30 are shaped so that the distance Ra is smaller than the distance Rb.

Thus, the thickness of rein as the solid insulator is large in the vicinity of the conductive shield 35 and small in the portion in which the conductive shield 35 is not present. This serves to reduce the electric field strength in the vicinity of the conductive shield 35, in which electric fields may concentrate.

Further, more of the potential can be assigned to the ground side. Accordingly, it is possible to level the creepage field of the hole 30 in the valve movable' side mold section.

Further, as shown in the side view in FIG. 20, the insulating section 87 and the hole 30 are formed so that the inter-axis distance Ra portion and the inter-axis distance Rb portion are joined together by the curve with the radius of curvature R1 and the curve with the radius of curvature R2 and so that the junction between the curves does not have any straight portions parallel with the grounded bottom surface. Thus, the creepage field of the hole 30 can be further leveled.

Furthermore, in the switch gear 112 according to the present embodiment, it is possible to increase the creepage distance of the hole 30 inside the insulating section 87, which is not provided with the ground layer, without changing the size of the entire valve movable side mold section 2. Accordingly, the insulation distance can be increased. This improves the withstanding voltage to reduce the amount of resin required. Therefore, the switch gear can be produced more economically.

### (Seventh Embodiment)

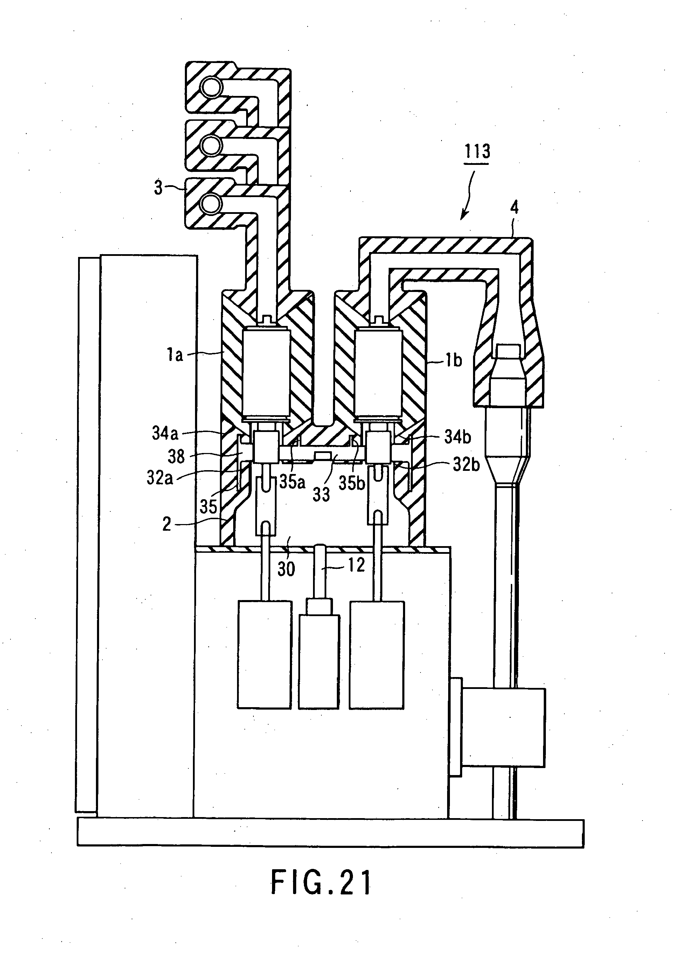

FIG. 21 is a side sectional view showing an example of configuration of a closed switch gear according to the present embodiment.

The valve movable side mold section 2 of a switch gear 113 in FIG. 21 comprises a shield conductor 38 in which the conductive shield 35, conductive shields 35a and 35b, and the conductor 33 are integrally formed. The shield conductor 38 is embedded in the insulating section 87.

The conductive shields 35a and 35b are embedded in the insulating section 87 so as to surround the joining sections 34a and 34b, respectively.

In the switch gear 113 according to the present embodiment, the conductive shield 35 reduces the electric field strength inside the hole 30 to transfer the maximum electric field strength inside the hole 30 to the surface of the insulator. Consequently, the withstanding voltage performance can be improved to reduce the creepage distance.

Further, the conductive shields 35a and 35b, surrounding the joining sections 34a and 34b and embedded in the insulating section 87, serve to reduce the electric field strength in the junction with the valve mold sections 1a and 1b. Consequently, the withstanding voltage performance can be improved to reduce the insulation distance of the joining sections 34a and 34b.

Further, the shield conductor 38, in which the conductive shields 35, 35a, and 35b and the conductor 33 are molded of integral metal, serves to reduce the number of parts required. It is also possible to make assembly easier and reduce the time required for assembly.

Furthermore, the integration of the conductive shields 35, 35a, and 35b with the conductor 33 prevents the local concentration of electric fields caused by decentering of the conductive shields 35, 35a, and 35b in both joining sections 34a and 34b and the hole 30 when the valve mold sections 1a and 1b are joined to the valve movable side mold section 2, while the insulating operating rods 31a and 31b are connected to the movable side conductors 22a and 22b of the valve mold sections 1a and 1b, respectively. This eliminates the need to design electric fields taking into account the local concentration of electric fields caused by decentering of the conductive shields 35, 35a, and 35b. Consequently, a more compact insulating structure can be designed.

### (Eighth Embodiment)

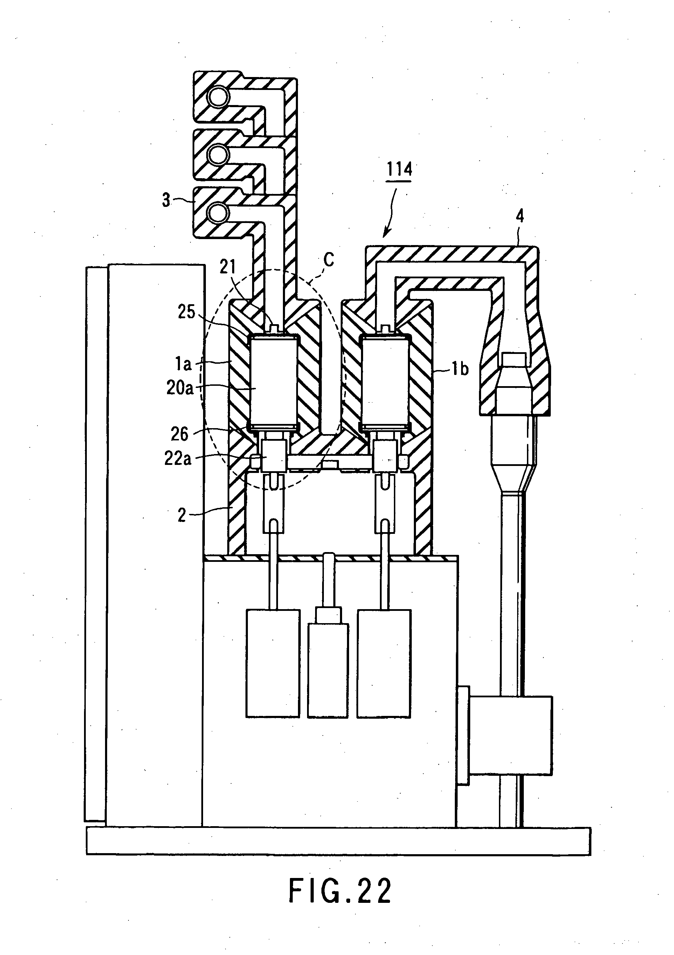

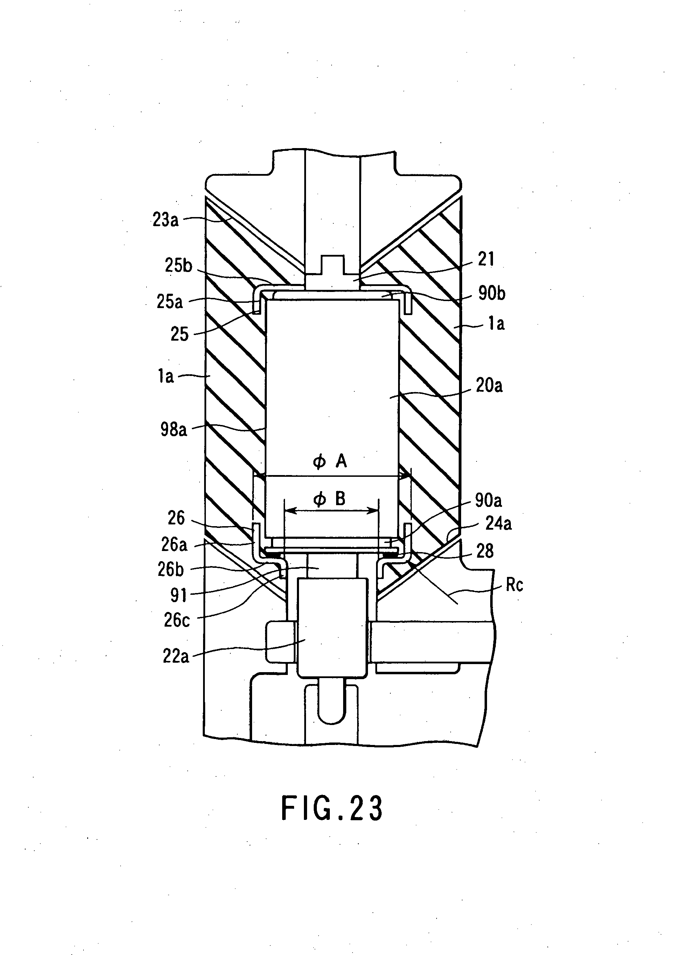

FIG. 22 is a side sectional view showing an example of configuration of a closed switch gear according to the present embodiment. FIG. 23 is an enlarged view of a section C of FIG. 22.

In the present embodiment, the valve mold section 1a will be described. However, the description also applies to the valve mold section 1b.

In a switch gear 114, shown in FIGS. 22 and 23, the sides of the vacuum valve 20a constitute an insulating container 98a.

A conductive shield 26 covers a movable side end of the vacuum valve 20a and one end of insulating container 98a of the vacuum valve 20a.

The conductive shield 26 comprises a portion 26a surrounding the insulating container 98a, a flat portion 26b substantially parallel with a movable side flange 90a of the vacuum valve 20a, and a portion 26c surrounding a movable side conducting shaft 91 of the vacuum valve 20a.

The outer diameter φA of the portion surrounding the insulating container 98a is larger than the outer diameter φB of the portion surrounding the movable side conducting shaft 91.

There is a curved surface between the portion 26a surrounding the insulating container 98a and the flat portion 26b. That is, the portion 26a surrounding the insulating container 98a and the flat portion 26b are joined together so as to have a radius of curvature.

A conductive packing 28 is provided between the flat portion 26a and the movable side flange 90a.

A conductive shield 25 covers a fixed side end of the vacuum valve 20a and the other end of insulating container 98a of the vacuum valve 20a.

The conductive shield 25 comprises a portion 25a surrounding the insulating container 98a and a flat portion 25b substantially parallel with a fixed side flange 90b of the vacuum valve 20a.

There is a curved surface between the portion 25a surrounding the insulating container 98a and the flat portion 25b.

If the vacuum valve 20a is covered with a solid insulator, the junction between the insulating container 98a, made of glass or ceramic, and each of the metal flange 90a and 90b, vacuum sealing sections, is likely to be stressed because they are composed of different materials.

However, in the switch gear according to the present embodiment, the conductive shields 25 and 26, which cover the movable and fixed side ends, respectively, of the vacuum valve 20a, are provided at the respective ends of the vacuum valve 20a.

Thus, even if the connection between the insulating container 98a and the flange 90a or 90b is released, the magnitude of electric fields can be sufficiently reduced because the released portion is covered with the conductive shield 25 or 26, respectively. This prevents this portion from becoming electrically defective. Consequently, the percent defective can be reduced.

Further, since the vacuum valve 20a is provided with the conductive shield 26, the single part can reduce the magnitude of stress and electric fields at the ends of the vacuum valve 20a, the magnitude of electric fields at the junction between the valve mold section 1a and the valve movable side mold section 2, and the magnitude of electric fields in the vacuum valve movable side conductor 22a. The reduction of magnitude of electric fields and stress serves to improve insulation performance and reliability and reduce the number of parts required. It is also possible to reduce the number of steps required and improve operability.

Further, the conductive packing 28, provided between the flat portion of the conductive shield 26 and the vacuum valve movable side flange 90a, is used as a resin stop for the movable conductor 22a of the vacuum valve 20a during casting. It also makes the potential across the conductive shield 26 substantially the same as that on the movable side of the vacuum valve 20a. Consequently, the number of parts required can be reduced.

### (Ninth Embodiment)

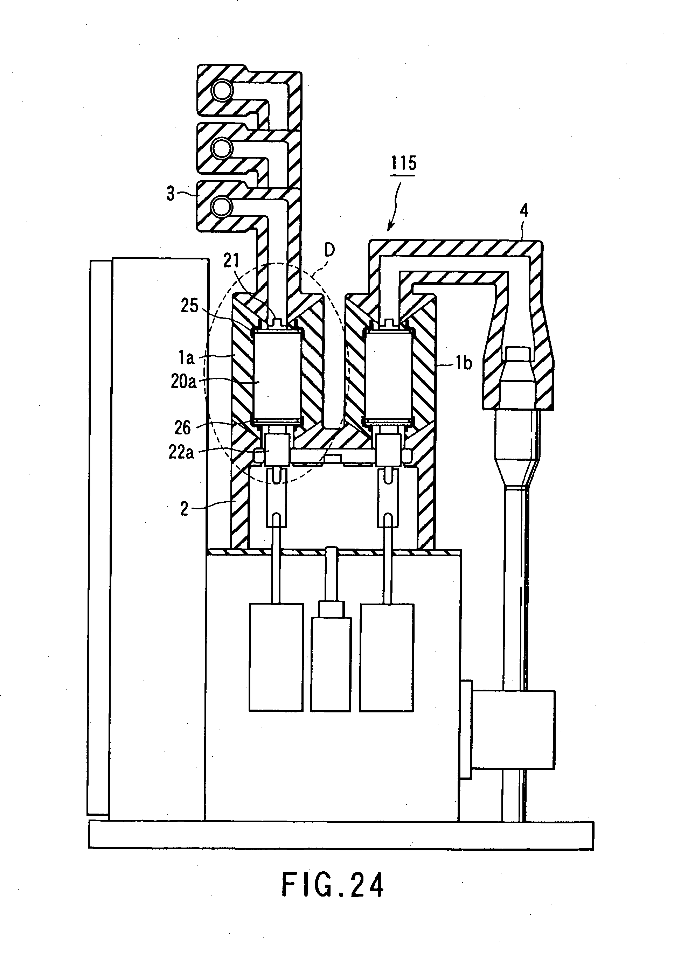

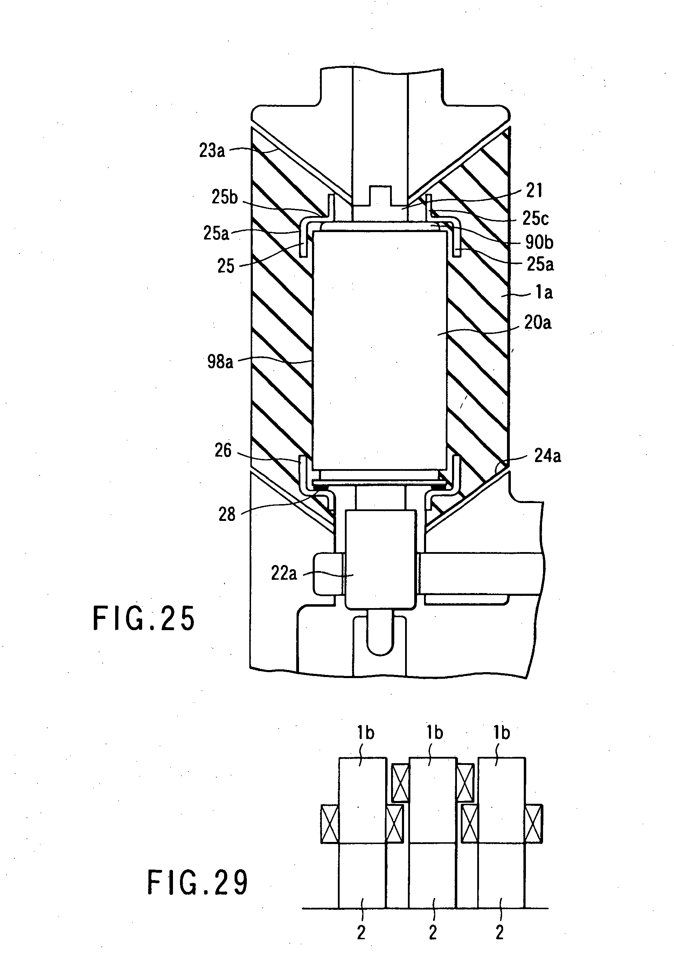

FIG. 24 is aside sectional view showing an example of configuration of a closed switch gear according to the present embodiment. FIG. 25 is an enlarged view of a section D of FIG. 24.

In the present embodiment, the valve mold section 1a will be described. However, the description also applies to the valve mold section 1b.

In a switch gear 115 in FIGS. 24 and 25, the joining section 23a is concave. The conductive shield 25 comprises the portion 25a surrounding the insulating container 98a, the flat portion 25b substantially parallel with the fixed side flange 90b of the vacuum valve 20a, and a portion 25c surrounding a hole in the concave fixed side joining section 23a.

In the switch gear 115 according to the present embodiment, the vacuum valve 20a is provided with the conductive shield 25, so that the single part can reduce the magnitude of stress and electric fields at the ends of the vacuum valve 20a and the magnitude of electric fields at the fixed side joining section 23a of the valve mold section 1a. The reduction of magnitude of electric fields and stress serves to improve insulation performance and reliability and reduce the number of parts required. It is also possible to reduce the number of steps required and improve operability.

### (Tenth Embodiment)

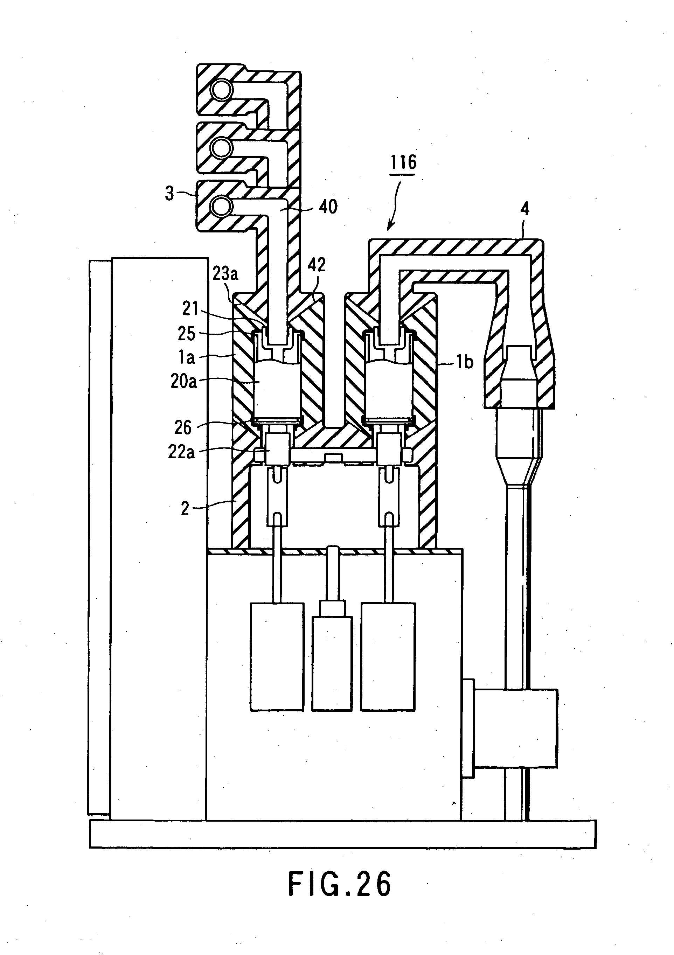

FIG. 26 is a side sectional view showing an example of configuration of a closed switch gear according to the present embodiment.

In the present embodiment, the valve mold section 1a will be described. However, the description also applies to the valve mold section 1b.

In a'switch gear 116 in FIG. 26, an end of a fixed side conductor 21 of the vacuum valve 20a is concave. A contactor is inserted into a hole in the fixed side conductor 21 so as to be electrically connected to other components such as the bus connecting mold section 3. In the valve mold section 1a, the fixed side joining section 23a is also concave.

In the switch gear 116 according to the present embodiment, the fixed side conductor 21 of the vacuum valve 20a is concave. The contactor is inserted into the hole in the fixed side conductor 21. The fixed side joining section 23a is also concave.

Thus, the other components can be stably joined to the valve mold section 1a. This serves to reduce the distance between the end of the fixed side conductor 21 and the fixed side joining section 23a. It is thus possible to reduce the axial size of the valve mold section 1a.

Further, at the concave tip of the fixed side conductor 21 of the vacuum valve 20a, it is possible to reduce the magnitude of electric fields at the connected portion of the fixed side conductor 21 and at the fixed side joining section 23a. Therefore, the size of the switch gear can be reduced.

### (Eleventh Embodiment)

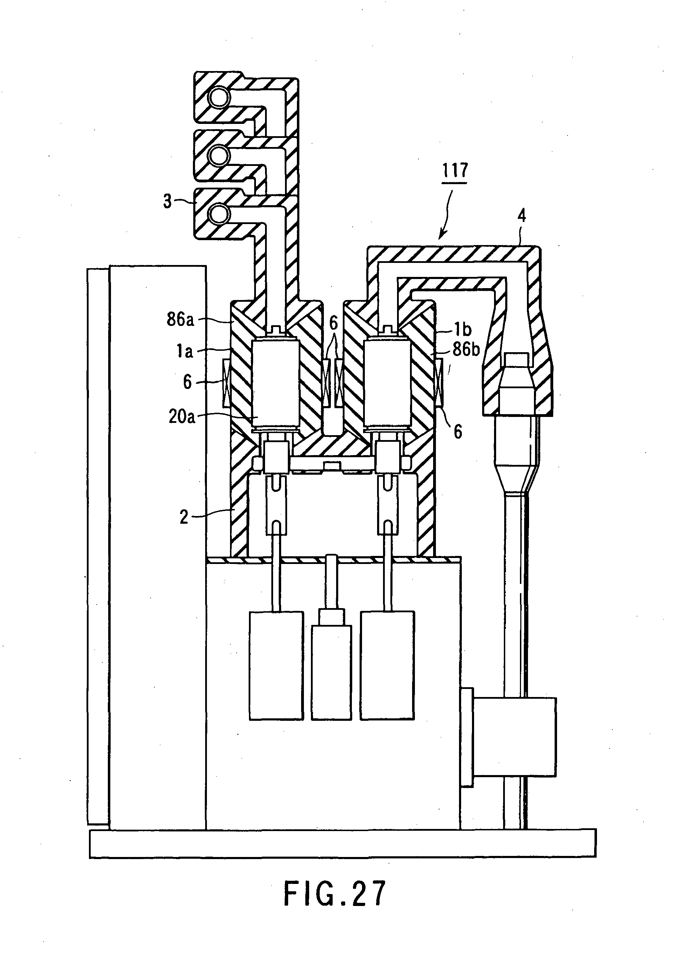

FIG. 27 is a side sectional view showing an example of configuration of a closed switch gear according to the present embodiment.

A switch gear 117 in FIG. 27 is a variation of the above described switch gears 101 to 106. The switch gear 117 comprises a transformer 6 on the outer peripheral surface of insulating section 86a of the valve mold section 1a. It also comprises a transformer 6 on the outer peripheral surface of insulating section 86b of the valve mold section 1b.

Thus, the space between the valve mold sections 1a and 1b can be effectively used. Consequently, the switch gear can be miniaturized.

### (Twelfth Embodiment)

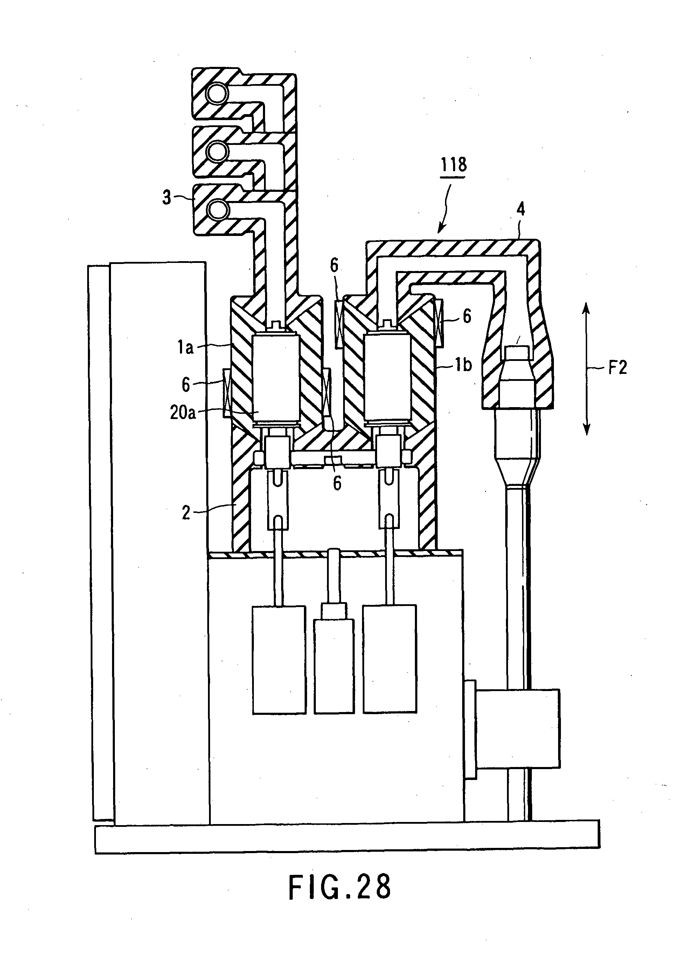

FIG. 28 is a side sectional view showing an example of configuration of a closed switch gear according to the present embodiment. FIG. 29 is a diagram showing how the valve mold section 1b and the valve movable side mold section 2 are located when the switch gear in FIG. 28 is viewed from its front.

A switch gear in FIG. 28 is similar to the switch gear according to the eleventh embodiment. However, the position of the transformer 6 on the valve mold section 1a is different from the position of the transformer 6 on the adjacent valve mold section 1b in the axial direction F2 of the vacuum valves 20a and 20b.

This serves to reduce the size of the space in which the transformers 6 are installed. Therefore, the size of the switch gear can be reduced.

### (Thirteenth Embodiment)

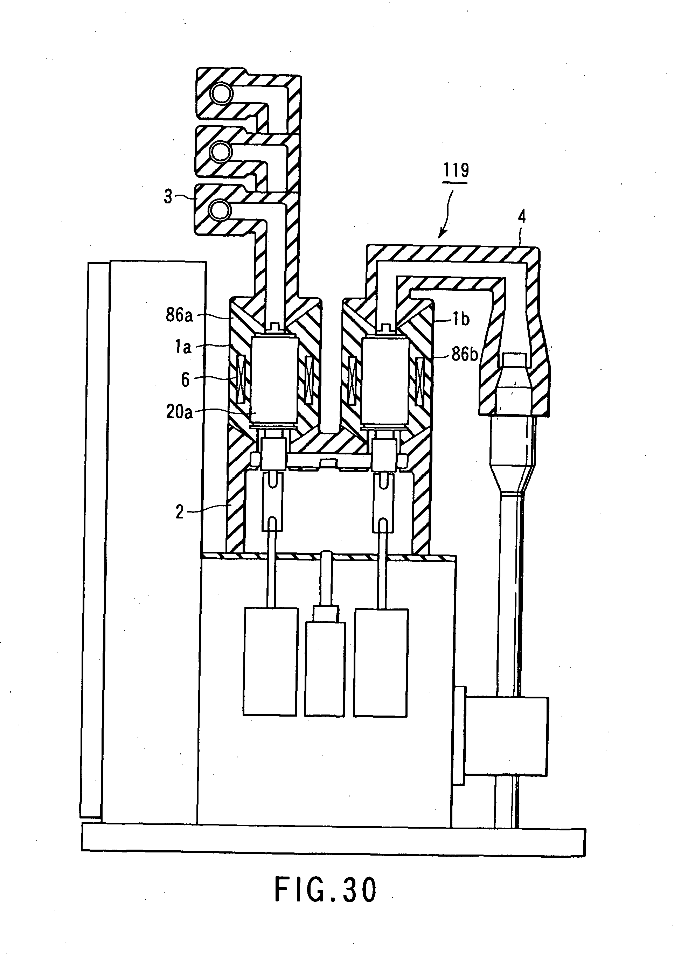

FIG. 30 is a side sectional view showing an example of configuration of a closed switch gear according to the present embodiment.

In the present embodiment, the valve mold section 1a will be described. However, the description also applies to the valve mold section 1b.

The valve mold section 1a of a switch gear 119 in FIG. 30 comprises transformers 7 surrounding the sides of the vacuum valve 20a and embedded in the insulating section 86a.

This serves to reduce the size of the space in which the transformers 6 are installed. Consequently, the size of the switch gear can be reduced. It is also possible to reduce the number of steps required to mount the transformers.

### (Fourteenth Embodiment)

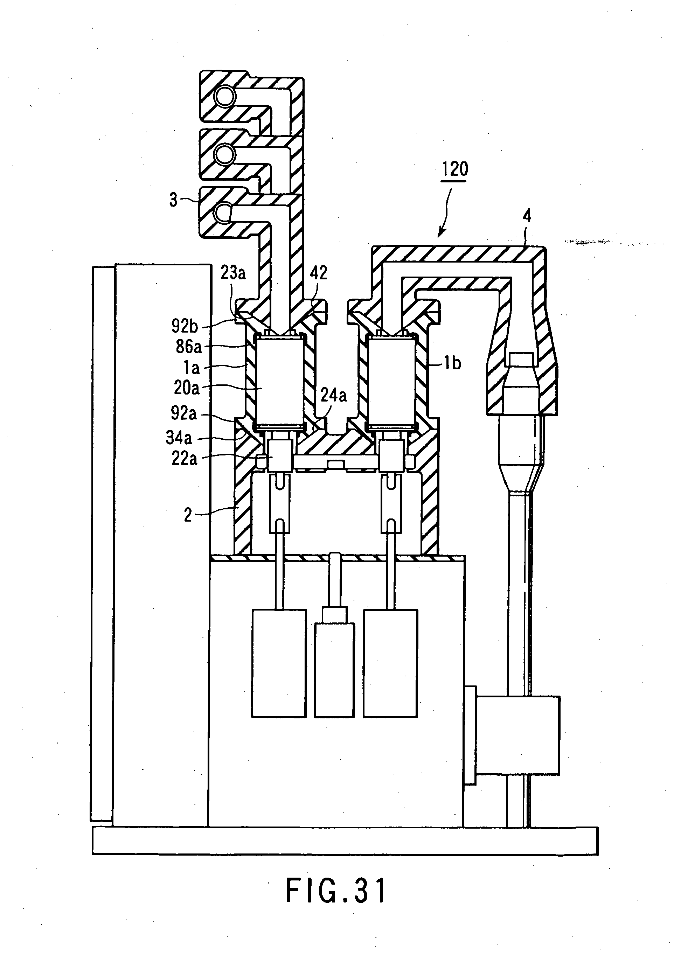

FIG. 31 is a side sectional view showing an example of configuration of a closed switch gear according to the present embodiment.

In the present embodiment, the valve mold section 1a will be described. However, the description also applies to the valve mold section 1b.

A switch gear 120 in FIG. 31 is a variation of the above described switch gears 101 to 119. The valve mold section 1a of the switch gear 120 comprises a flange section 92a on its movable side and a flange section 92b on its fixed side. The flange sections 92a and 92b are used to mechanically join the valve mold section 1a to other components.

The valve mold section 1a is formed so that the radial minimum length of the flange sections 92a and 92b is larger than the maximum diameter of the insulating section 86a, which covers the outer surface of the vacuum valve 20a.

This serves to reduce the ground-side electric field strength at the joining section 24a of the valve mold section 1a and at the joining section 34a of the valve movable side mold section 2 as well as the ground-side electric field strength at the joining section 23a of the valve mold section 1a and at the joining section 42 of the bus connecting mold section 3. The insulating performance can thus be improved. It is also possible to reduce the amount of resin required for the insulating section 86a. Consequently, the switch gear can be produced more economically.

### (Fifth Embodiment)

According to the present embodiment, in the above described switch gears 101 to 120, the valve mold section 1a, comprising the disconnecting switch vacuum valve 20a, has substantially the same shape as the valve mold section 1b, comprising the circuit breaker vacuum valve 20b.

This serves to coordinate the shape of joining sections 34a and 34b of the valve movable side mold section 2, joined to the valve mold sections 1a and 1b, respectively, the shape of joining section 42 of the bus connecting mold section 3, the shape of joining section 47 of the main circuit connecting mold section 4, and the shapes of joining sections of various other components. The amount of configurable circuits can be substantially increased by simply altering the valve mold sections 1a and 1b according to a circuit configuration.

Further, in spite of an increase in the amount of configurable circuits, the types of components can be reduced. Required parts can thus be standardized. Furthermore, if switch gears are configured in parallel board form, it is possible to increase the number of circuits that can be constructed within one board. As a result,' the size of the switch gear can be reduced.

Moreover, it is possible to reduce the number of molds required to produce the components. This is advantageous in production. As a result, an expensive and reliable switch gear can be realized.

### (Sixteenth Embodiment)

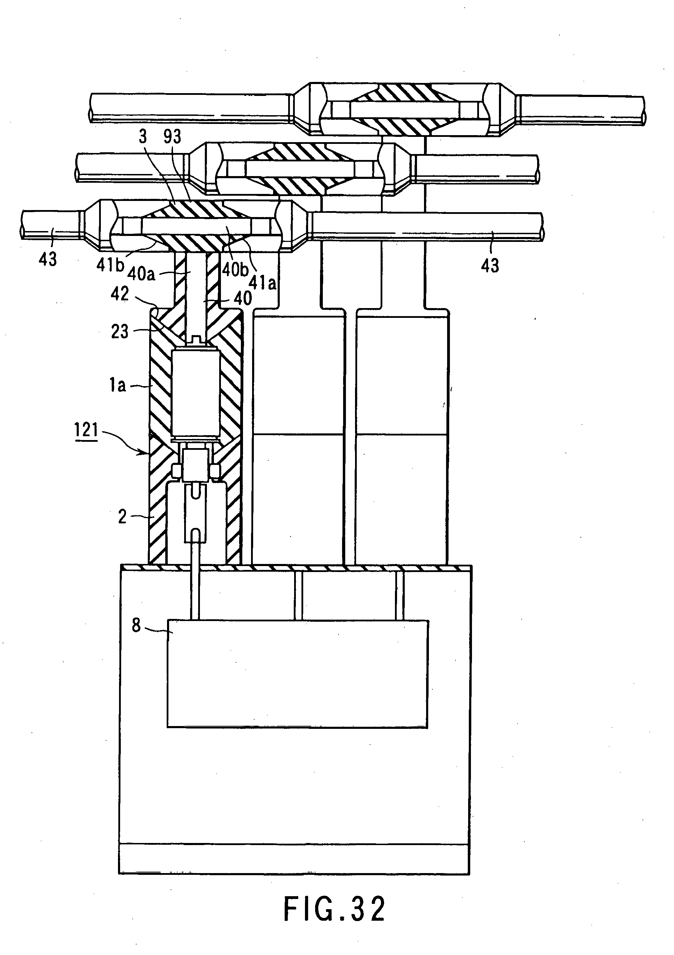

FIG. 32 is a front sectional view showing an example of configuration of a closed switch gear according to the present embodiment.

A switch gear in FIG. 32 comprises the bus connecting mold section 3 that connects the valve mold section 1a and a bus 43 together.

The joining sections 41a and 41b of the bus connecting mold section 3 are used to join to the bus 43. The joining sections 41a and 41b are provided at the respective ends of a bar-like conductor 40b of the bus connecting conductor 40 so as to extend in the opposite directions.

The joining section 42 is used to connect to the valve mold section 1a. The joining section 42 is disposed at an end of an L-shaped conductor 40a of the bus connecting conductor 40. One end of the L-shaped conductor 40a is connected substantially to the middle of the bar-like conductor 40b. The joining section 42 is provided at the other end of the L-shaped conductor 40a.

The bus connecting conductor 40 is shaped so that the central axis of the bar-like conductor 40b does not cross the central axis of other end of the L-shaped conductor 40a.

Thus, the bus connecting mold section 3 of the same shape can be used to form bus connection positions in two directions, by rotating the bus connecting mold section 3 through 180° around the central axis of other end of the L-shaped conductor 40a to connect it to the valve mold section 1a. As a result, parallel boards can be more freely constructed using a reduced number of components. d

### (Seventeenth Embodiment)

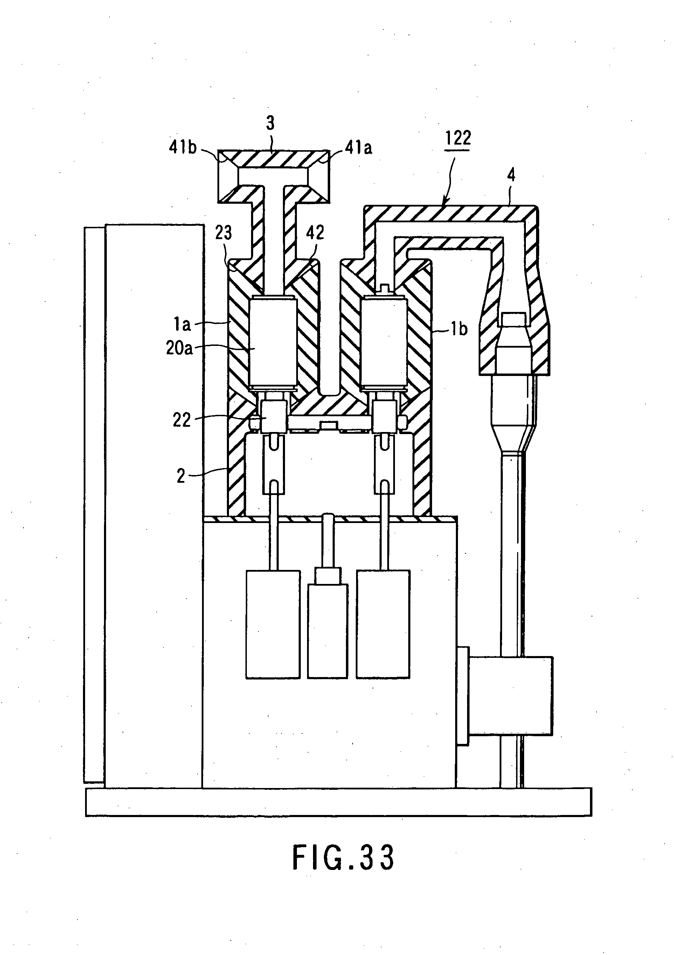

FIG. 33 is a side sectional view showing an example of configuration of a closed switch gear according to the present embodiment.

A switch gear in FIG. 33 comprises the bus connecting mold section 3 that connects the valve mold section 1a and a bus 43 together.

The joining sections 41a and 41b of the bus connecting mold section 3 are used to join to the bus.

The bus connecting joining section 41a of the bus connecting mold section 3 is connected to the bus so as to face toward the front surface of the switch gear main body. The bus connecting joining section 41b is connected to the bus 43 so as to face toward the rear surface of the switch gear main body.

Thus, when switch gears are arranged in parallel to form parallel boards, the buses can be easily connected together between the parallel boards. Further, the transformers installed in the front and rear of the switch gears can be easily connected together. Furthermore, the parallel boards with the switch gears can be more freely constructed and arranged in an electrical room.

### (Eighteenth Embodiment)

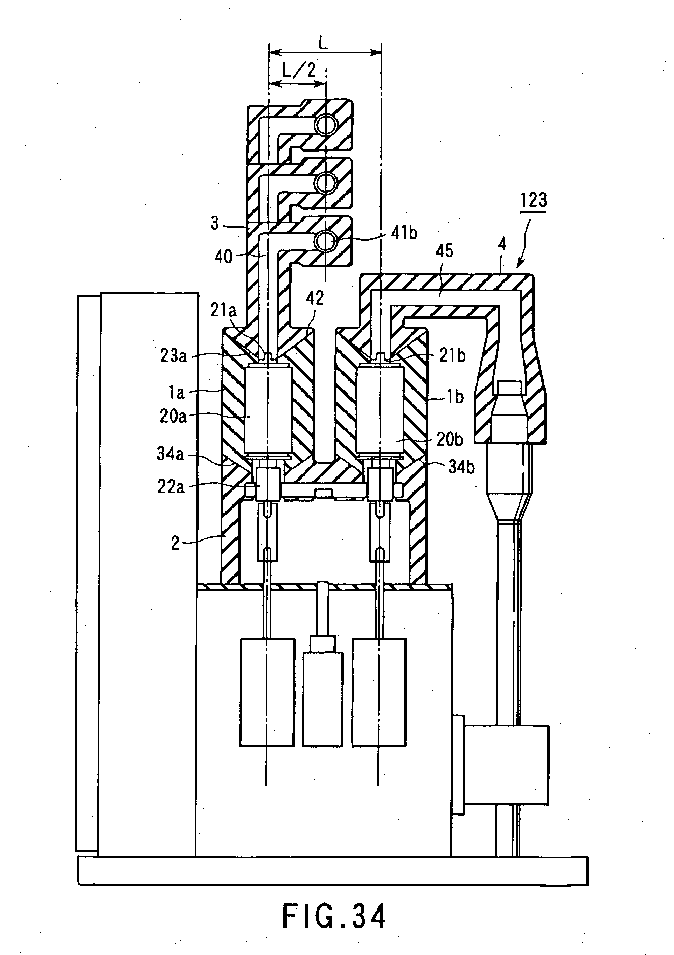

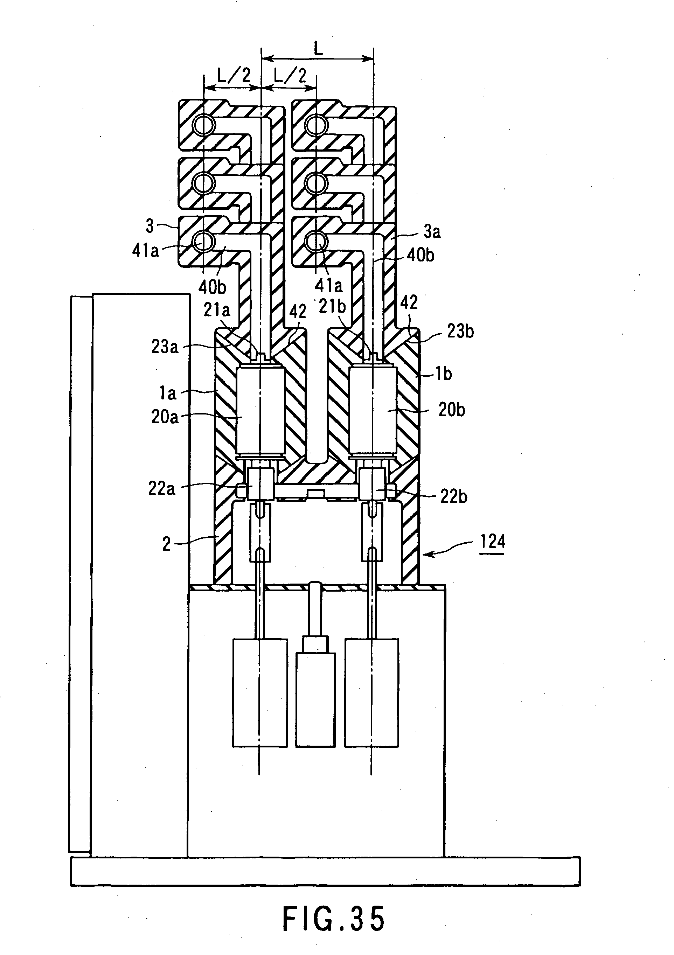

FIGS. 34 and 35 are side views showing a first and second examples of configurations of a closed switch gear according to the present embodiment.

Switch gears 123 and 124 in FIGS. 34 and 35 are variations of the above described switch gears 101 to 122.

In the switch gears 123 and 124, half of the distance L between the central axes of the adjacent joining sections 34a and 34b of the single valve movable side mold section 2 is substantially equal to the distance between the central axis of each of the joining sections 41a and 41b of the bus connecting mold section 3 and the central axis of the joining section 42.

Thus, the position of the bus established after the bus connecting mold section 3 has been rotated through 180° around the central axis of other end of the L-shaped conductor 40a and connected to the valve mold section 1a is substantially the same as the position of the bus in the bus connecting mold section 3a connected to the valve mold section 1b, located adjacent to the valve mold section 1a in the same phase. As a result, parallel boards can be more freely constructed using a reduced number of components.

### (Nineteenth Embodiment)

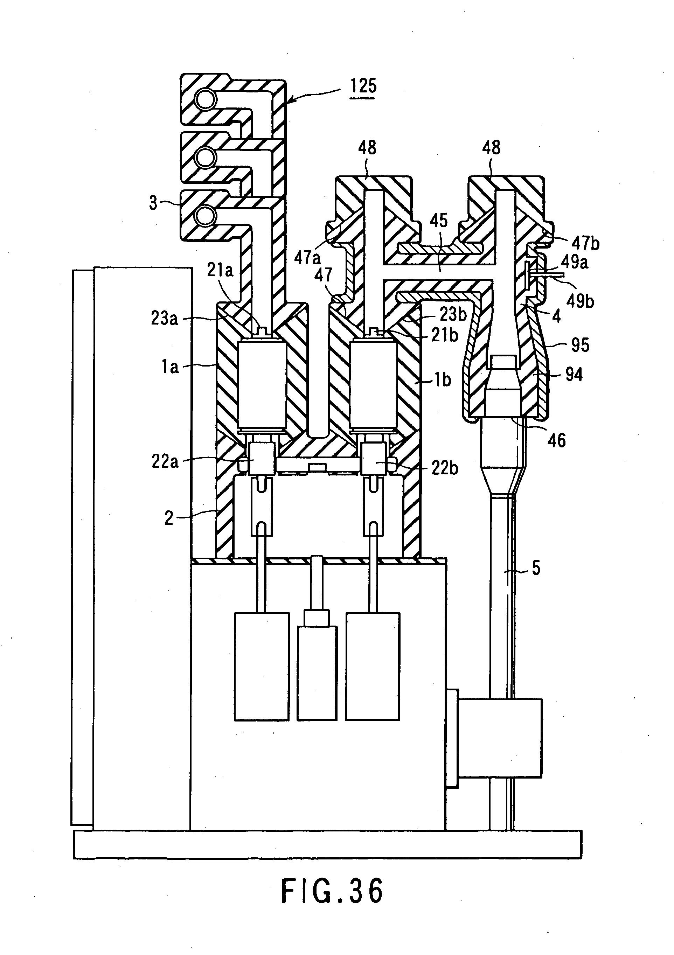

FIG. 36 is a side sectional view showing an example of configuration of a closed switch gear according to the present embodiment.

In the description of a switch gear 125 in FIG. 36, the main circuit connecting conductor 45 of the main circuit connecting mold section 4 has three or more connecting ends. It is possible to freely change the number of connecting ends of the'main circuit connecting conductor 4.

A first connecting end of the main circuit connecting conductor 45 is provided with the main circuit external lead-in cable joining section 46 to which the cable 5 is connected.

A second connecting end of the main circuit connecting conductor 45 is provided with the joining section 47 used to join to the fixed side joining section 23b of the valve mold section 1b.

A third and fourth connecting ends of the main circuit connecting conductor 45 are provided with joining sections 47a and 47b, respectively. An insulating cap 48 is connected to the joining sections 47a and 47b.

The joining sections 46, 47, 47a, 47b are not provided with the ground layer 45.

Instead of the insulating cap 48, a component comprising an instrument transformer, a lightning rod, a vacuum ground device, or the like may be connected to the joining sections 47a and 47b.

Further, the main circuit connecting mold section 4 of the switch gear 125 comprises a disk electrode 49a and a conductor 49b.

The disk electrode 49a is arranged close to the main circuit connecting conductor 45 and is embedded in the insulating section 94.

The conductor 49b has one end connected to the disk electrode 49a and the other end projecting out of an outer layer of the insulating layer 94. This provides an electrostatic capacity between the disk electrode 49a and the main circuit. This electrostatic capacity can be used to check whether or not the main circuit is charged.

### (Twentieth Embodiment)

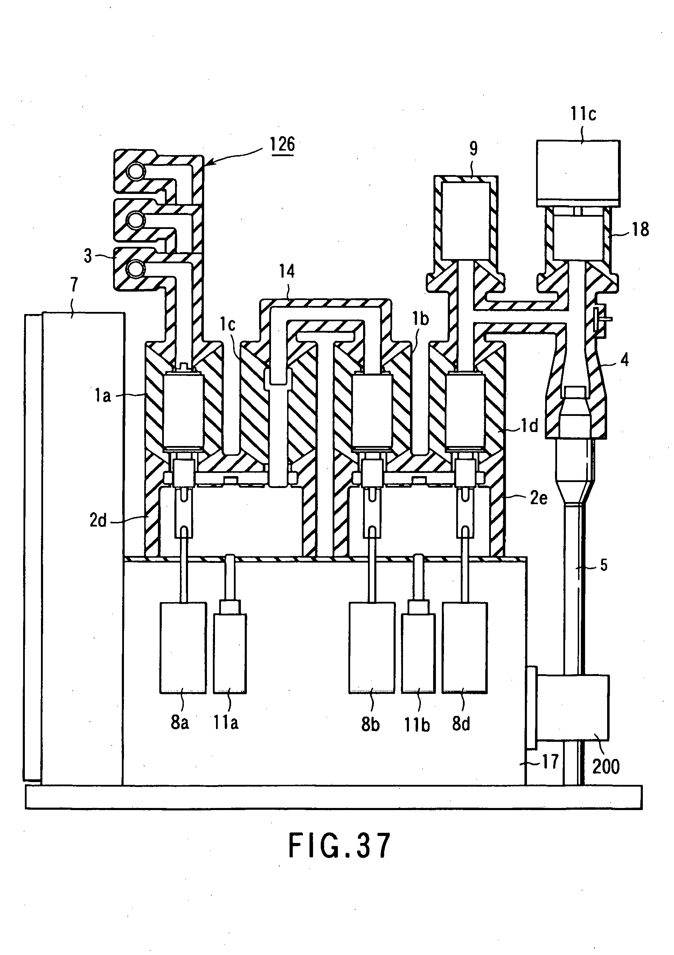

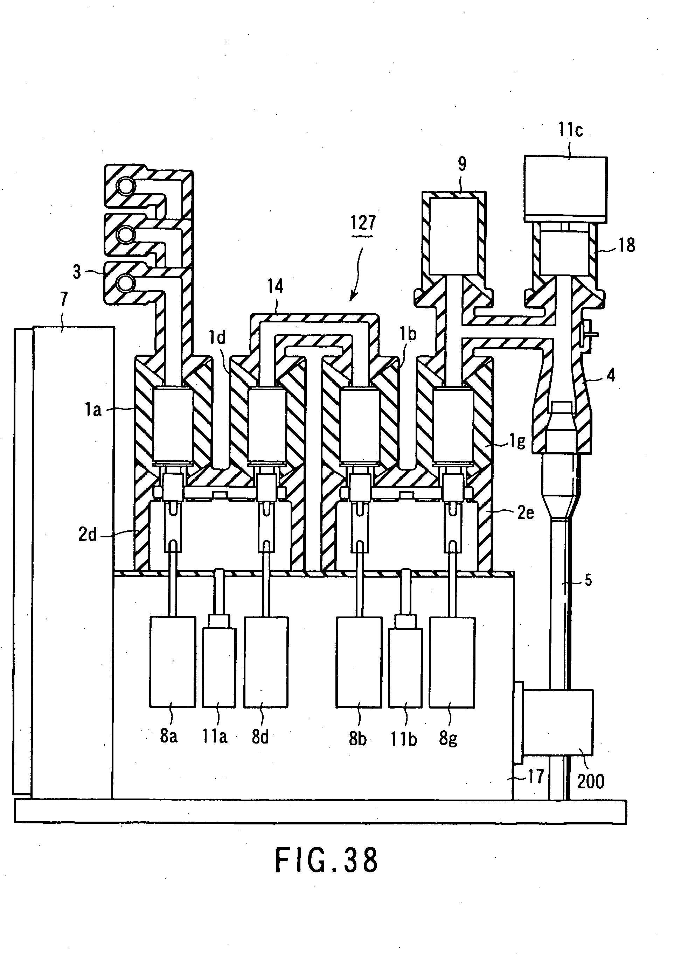

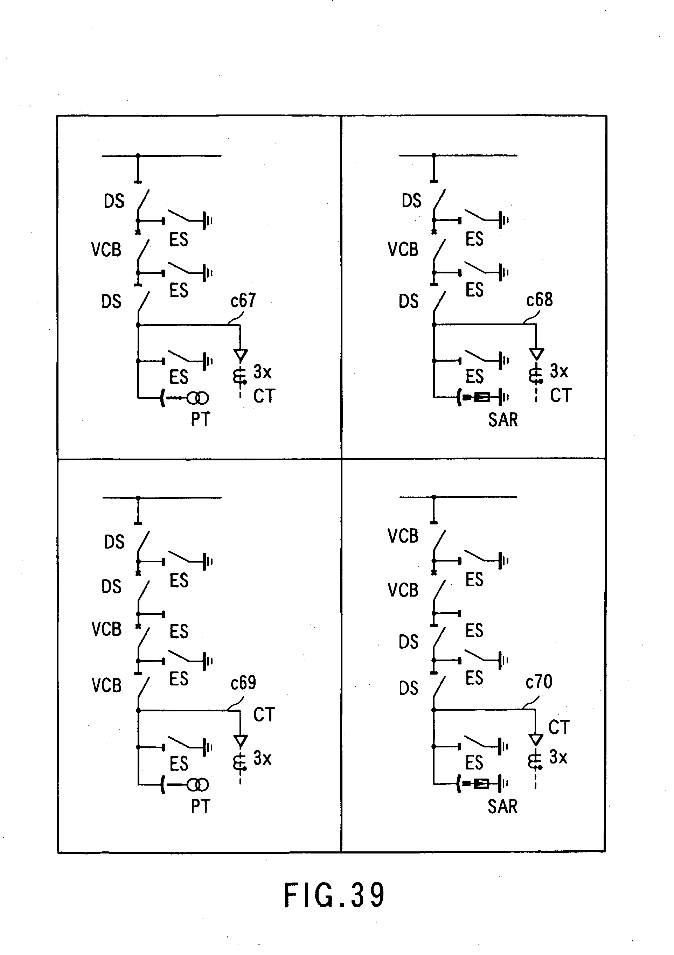

FIGS. 37 and 38 are side sectional views showing a first and second examples of configurations of a closed switch gear according to the present embodiment. FIG. 39 is a diagram showing an example of an electric circuit composed of the switch gear according to the present embodiment.

A switch gear 126 in FIG. 37 is a closed switch gear constituting an electric circuit c67 in FIG. 39.

In the switch gear 126, valve movable side mold sections 2d and 2e are arranged so that the central axes of joining sections 34a and 34b of the valve movable side mold sections 2d and 2e, respectively, are linear in the respective phases.

The disconnecting switch valve mold section 1a is joined to the joining section 34a of the valve movable side mold section 2d. The conducting valve mold section 1c is joined to the joining section 34b.

The circuit breaker valve mold section 1b is joined to the joining section 34a of the valve movable side mold section 2e. The disconnecting switch valve mold section 1d is joined to the joining section 34b.

The equipment connecting mold section 14 is joined to the joining section 23c of the conducting valve mold section 1c and to the fixed side joining section 23b of the circuit breaker valve mold section 1b.

The bus connecting mold section 3 is joined to the fixed side joining section 23a of the disconnecting switch valve mold section 1a joined to the valve movable side mold section 2d.

The main circuit connecting mold section 4 is joined to the fixed side joining section 23a of the disconnecting switch valve mold section 1a joined to the second valve movable side mold section 2. The main circuit connecting mold section 4 is connected to the main circuit cable 5.

The instrument transformer 9 and a ground device valve mold section 18 are connected to the joining sections 47a and 47b, respectively, of the main circuit connecting mold section 4. A movable side conductor of the ground device valve mold section 18 is connected to ground (not shown) and driven by a ground device operating mechanism 11c.

The operation chamber 17 is provided with ground device operating mechanisms 11a and 11b. In the operation chamber 17, an operation is performed to ground the conductor 33, embedded in the valve movable side mold sections 2d and 2e.

A switch gear 127 in FIG. 38 is a closed switch gear constituting an electric circuit c69 in FIG. 39.

In the switch gear 127, the valve movable side mold sections 2d and 2e are arranged so that the central axes of joining sections 34a and 34b of the valve movable side mold sections 2d and 2e, respectively, are linear in the respective phases, as in the case with the switch gear 126.

The disconnecting switch valve mold sections 1a and 1d are joined to the joining sections 34a and 34b, respectively, of the valve movable side mold section 2b.

The circuit breaker valve mold section 1b and a circuit breaker valve mold section 1g are joined to the joining sections 34a and 34b, respectively, of the valve movable side mold section 2b.

The valve mold sections 1d and 1b are connected together using the equipment connecting mold section 14. The valve mold section 1a is connected to the bus via the bus connecting mold section 3. The valve mold section 1g is connected to the main circuit cable 4 via the main circuit connecting mold section 4.

The instrument transformer 9 and the ground device valve mold section 18 are connected to the main circuit connecting mold section 4 as in the case with the switch gear 126.

The operation chamber 17 is provided with the ground device operating mechanisms 11a and 11b. In the operation chamber 17, an operation is performed to ground the conductor 33 in the valve movable side mold sections 2d and 2e.

The types of the valve mold sections shown in FIGS. 37 and 38 can be freely changed so as to be adapted for a disconnecting switch, a circuit breaker, conduction, or the like as required.

Further, the instrument transformer 9 and the ground device valve mold section 18, connected to the main circuit connecting mold section 4, can be replaced with an insulating cap or a lightning rod as required.

In the switch gears 126 and 127 according to the present embodiment, the plurality of valve mold sections 2d and 2e are disposed so that the central axes of the joining sections 34a and 34b are linear in the respective phases. Thus, in the switch gears 126 and 127, it is possible to increase the number of valve mold sections that can be installed.

Furthermore, the equipment connecting mold section 14 covered with a solid insulator can be used to connect the fixed sides of the valve mold sections together as required. Various electric circuits such as those shown in FIG. 39, described above, can be constructed on a single board by adapting the valve mold sections for a disconnecting switch, a circuit breaker, conduction, or the like according to a circuit configuration. This substantially increase the amount of configurable applied circuits.

Further, in spite of an increase in the amount of applied circuits, the types of components can be further reduced. Required parts can thus be standardized. Furthermore, if switch gears are configured in parallel board form, it is possible to increase the number of circuits that can be constructed within one board. As a result, the size of the switch gear can be reduced.

Moreover, it is possible to reduce the number of molds required to produce the components. This is advantageous in production. As a result, an expensive and reliable switch gear can be realized.

### (Twenty-first Embodiment)

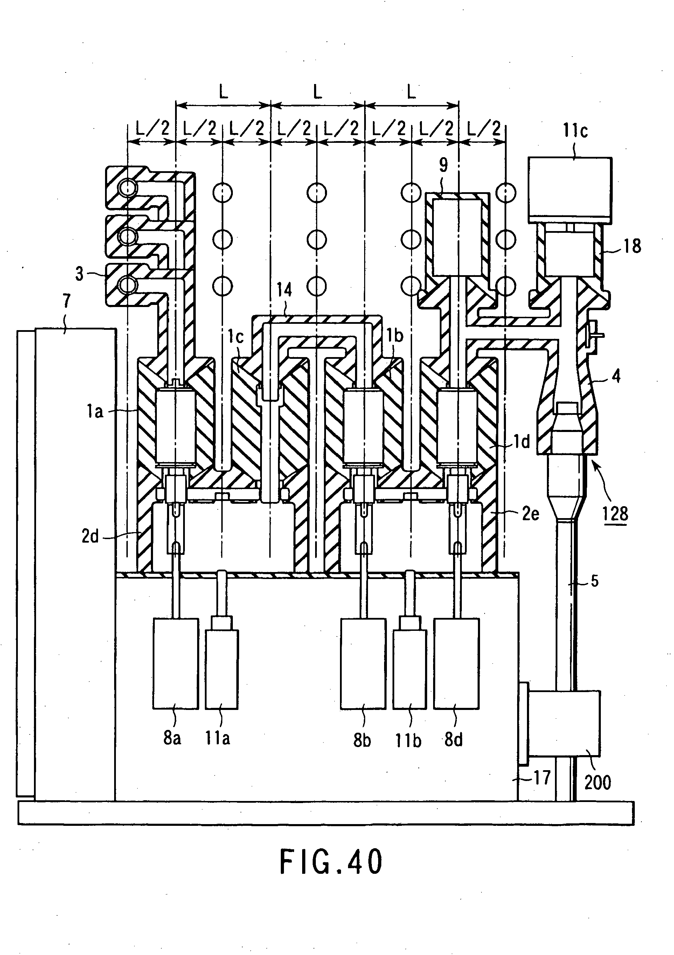

FIG. 40 is a side sectional view showing an example of configuration of a closed switch gear according to the present embodiment.

A switch gear in FIG. 40 is similar to the switch gear 126 according to the twentieth embodiment.

The valve mold sections 2d and 2e are arranged adjacent to each other. That is, the joining section 34b of the valve movable side mold section 2d is arranged adjacent to the joining section 34a of the valve movable side mold section 2e.

The valve mold section 1c is joined to the joining section 34b of the valve movable side mold section 2d. The valve mold section 1c is joined to the joining section 34a of the valve movable side mold section 2e.

The distance between the central axis of joining section 34b of the valve movable side mold section 2d and the central axis of joining section 34a of the valve movable side mold section 2e is substantially equal to the distance between the central axes of joining sections 34a and 34b, provided in the single valve movable side mold section 2d or 2e.

Further, half of the distance L between the joining sections 34a and 34b is substantially the same as the distance the central axis of each of the joining sections 41a and 41b of the bus connecting mold section 3 and the central axis of the joining section 42.

In the switch gear 128 according to the present embodiment, the position of the bus established after the bus connecting mold section 3 has been rotated through 180° around the central axis of the joining section 42 and connected to the valve mold section is substantially the same as the position of the bus in the bus connecting mold section 3 connected to the valve mold section located adjacent to the above valve mold section in the same phase. This provides five more positions at which the bus can be placed. Consequently, parallel boards can be more freely constructed using a reduced number of components.

### (Twenty-second Embodiment)

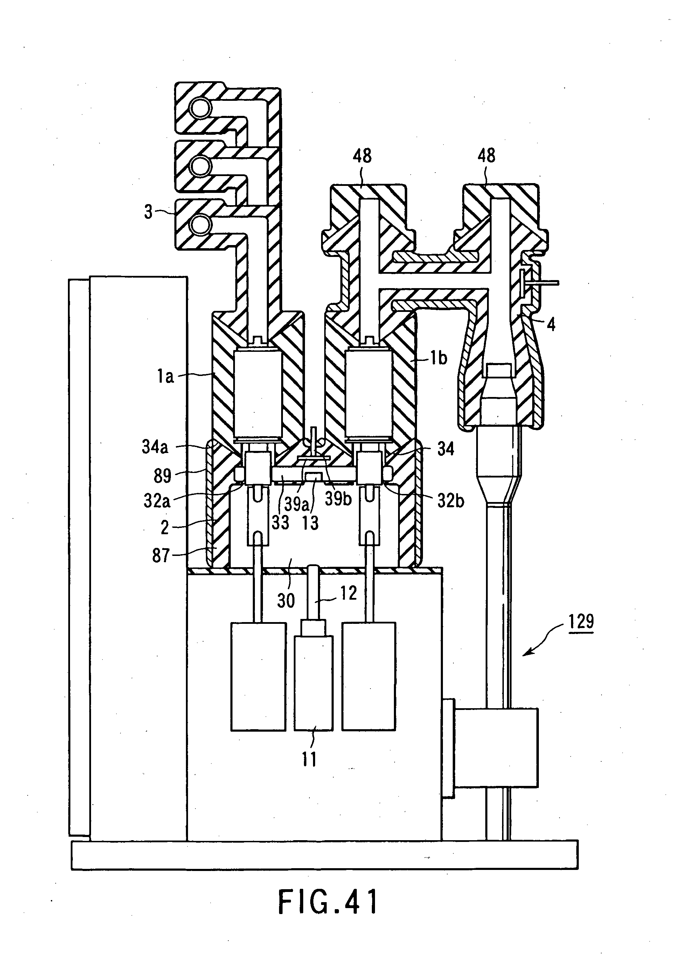

FIG. 41 is a side sectional view showing an example of configuration of a closed switch gear according to the present embodiment.

A switch gear 129 in FIG. 41 is a variation of the above described switch gears 101 to 128. The valve movable side mold section 2 of the switch gear 129 comprises a disk electrode 39a and a conductor 39b.

The disk electrode 39a is arranged close to the conductor 33 and is embedded in the insulating section 87.

The conductor 39b has one end connected to the disk electrode 39a and the other end projecting out of an outer layer of the insulating layer 87.

The conductor 39b, insulated from the ground layer 89, thus projects out of the outer layer of the insulating section 87 relative to the disk electrode 39a. This provides an electrostatic capacity between the disk electrode 39a and the main circuit. This electrostatic capacity can be used to check whether or not the main circuit is charged. An insufficient vacuum in the vacuum valve can also be detected.

### (Twenty-third Embodiment)

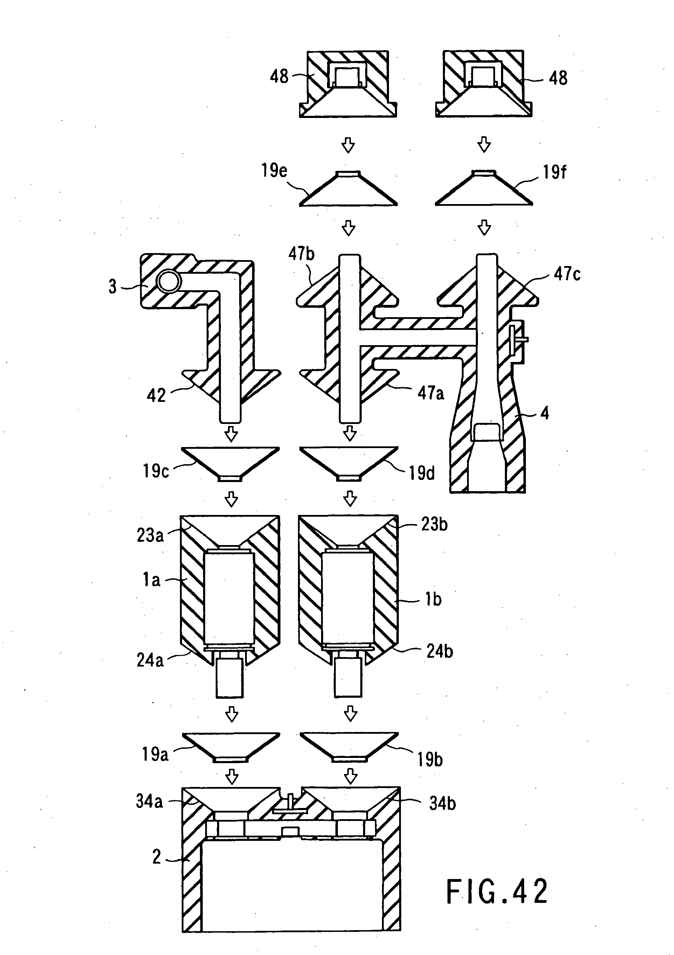

FIG. 42 is a schematic view showing an example of a method of connecting together the components of a closed switch gear according to the present embodiment.

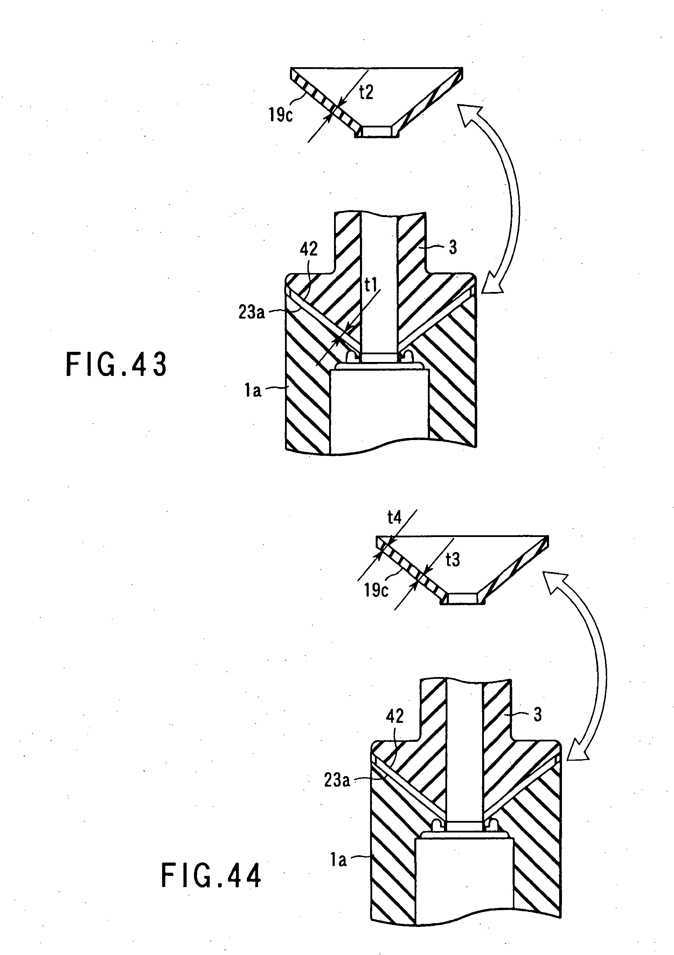

FIG. 43 is a sectional view showing an example of the joining sections of the closed switch gear according to the present embodiment.

As shown in FIGS. 42 and 43, in the switch gear according to the present embodiment, the components including the valve mold sections 1a and 1b, the valve movable side mold section 2, the bus connecting mold section 3, and the main circuit connecting mold section 4 are joined together by interposing insulators 19a to 19f having a smaller elastic modulus, among these components.

When each of the insulators 19a to 19f is sandwiched between the joining sections, elastic force is exerted between the joining sections upon joining. That is, the thickness t2 of each of the insulators 19a to 19f is larger than the gap t1 between the joining sections created if the corresponding components are assembled together without inserting the corresponding one of the insulators 19a to 19f between the joining sections.

Thus, the joining sections adhere more successfully to each other, thus improving the insulating performance. As a result, the joining sections can be miniaturized.

Further, the components can be connected together by simply inserting the corresponding one of the insulators 19a to 19f between them. This greatly simplifies the connection method to allow the switch gear to be assembled more easily and favorably.

### (Twenty-fourth Embodiment)

FIG. 44 is a sectional view showing an example of joining sections of the closed switch gear according to the present embodiment.

The closed switch gear according to the present embodiment is similar to the switch gear according to the twenty-third embodiment.

Each of the insulator 19a to 19f sandwiched between the joining sections of the corresponding components is assumed to have a central thickness t3 and an outer peripheral thickness t4.

In the present embodiment, the insulators 19a to 19f are formed so that the central thickness t3 is larger than the outer peripheral thickness t4.

Thus, when the components are connected together so as to sandwich the corresponding one of the insulators 19a to 19f between them, contact pressure is exerted on the different-solid-insulator interface between the insulator 19a to 19f and the joining sections of the components so as to act from the center of the interface, which has a larger electric field strength, toward its outer periphery, i.e. the ground side. As a result, an air layer at the interface is pushed from the center toward the outer periphery. This further improves the adhesion of the interface.

Further, after the components have been connected together, the highest contact pressure is exerted on the center of the different-solid-insulator interface, which has a larger electric field strength. This improves the withstanding voltage performance of the interface. Therefore, the joining sections can be miniaturized.

### (Twenty-fifth Embodiment)

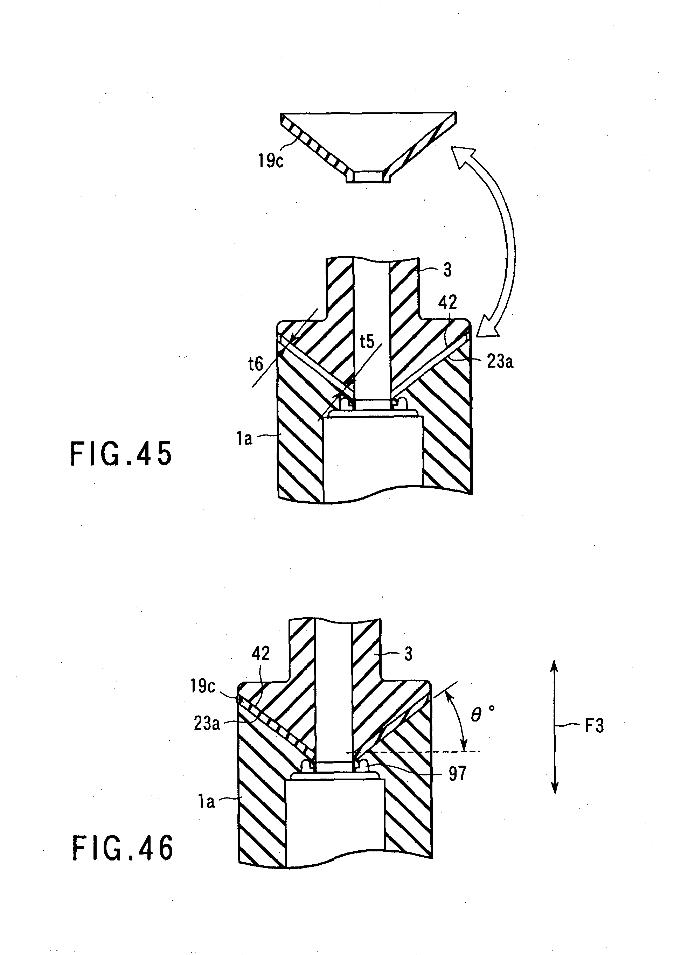

FIG. 45 is a sectional view showing an example of joining sections of the closed switch gear according to the present embodiment.

The closed switch gear according to the present embodiment is similar to the switch gears according to the twenty-third and -fourth embodiments.

A central gap t5 and an outer peripheral gap t6 are assumed to be formed between the joining sections of the components if these components are assembled together without sandwiching the corresponding one of the insulators 19a to 19f between them.

In the present embodiment, the joining sections of the components are formed so that the central gap t5 is smaller than the outer peripheral gap t6.

Then, the components are assembled together by sandwiching the corresponding one of the insulators 19a to 19f.

Thus, if the components are connected together so as to sandwich the corresponding one of the insulators 19a to 19f between them, contact pressure is exerted on the different-solid-insulator interface between the insulator 19a to 19f and the joining sections of the components so as to act from the center of the interface, which has a larger electric field strength, toward its outer periphery, i.e. the ground side. As a result, an air layer at the interface is pushed from the center toward the outer periphery. This further improves the adhesion of the interface.

Further, after the components have been connected together, the highest contact pressure is exerted on the center of the different-solid-insulator interface, which has a larger electric field strength. This improves the withstanding voltage performance of the interface. Therefore, the joining sections can be miniaturized.

### (Twenty-sixth Embodiment)

FIG. 46 is a sectional view showing an example of joining sections of the closed switch gear according to the present embodiment.

The closed switch gear according to the present embodiment is similar to the switch gears according to the twenty-third to -fifth embodiments.

In the present embodiment, one of the joining sections of the components to be joined together is concave, while the other is convex. One of the components comprises a conductive shield 97 surrounding a central portion of the concave joining section.

The joining sections of the components are formed so that the joining surfaces of the joining sections to be joined together lie at an angle of 25° to 50° with a direction perpendicular to a joining direction F3 if this direction is defined as 0°.

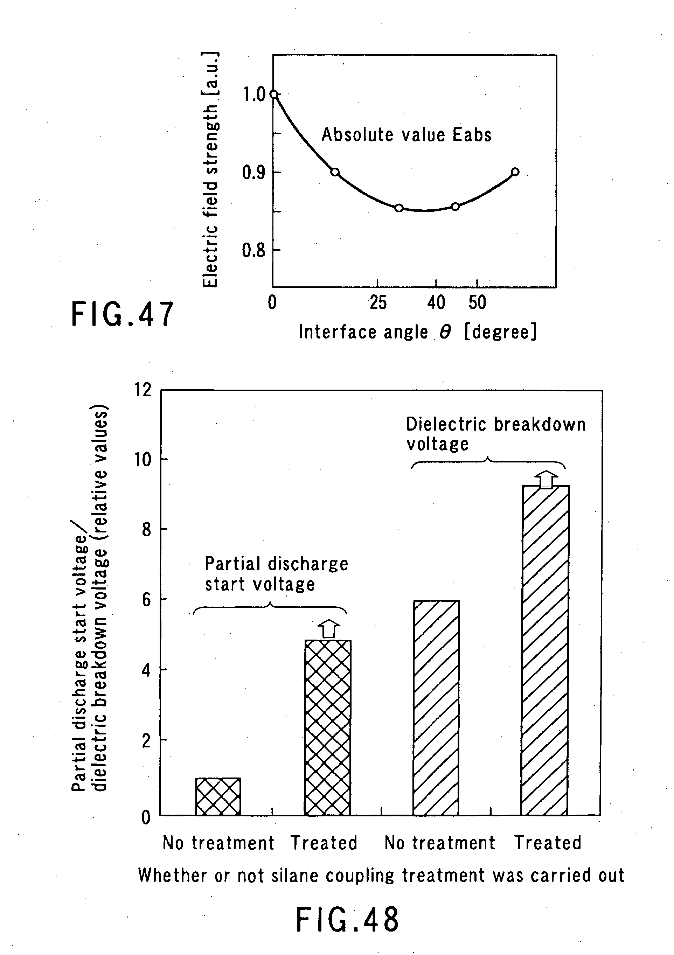

FIG. 47 is a characteristic diagram showing the relationship between the angle θ of the interface and the maximum electric field strength at the interface. FIG. 47 indicates that the interface angle θ has an optimum value with which the electric field strength can be reduced. Preferably, the inclination of the joining surfaces is in particular 40° to 50°.

By thus setting the: angle θ of the interface between each component and the insulator 19a to 19f at a value between 25° and 50°, the electric field strength of the different-insulator interface can be reduced. This serves to improve the withstanding voltage performance. As a result, the size of the joining sections can be reduced.

### (Twenty-seventh Embodiment)

A closed switch gear according to the present embodiment is similar to the switch gears according to the twenty-third to -sixth embodiments.

In the present embodiment, the insulators 19a to 19f sandwiched between the joining sections of the components have at most two types of shapes, except those used for connection with the bus and the main circuit cable.

Thus, the joining sections of the components can be standardized to allow various components to be joined together much more freely.

### (Twenty-eighth Embodiment)

A closed switch gear according to the present embodiment is similar to the closed switch gear according to the first to twenty-second embodiment. However, three phases are integrated together in at least one of the valve mold section and the valve movable side mold section.

This serves to reduce the number of mold parts required.

### (Twenty-ninth Embodiment)

A closed switch gear according to the present embodiment is similar to the closed switch gear according to the first to twenty-eighth embodiment. However, ground layers are provided on the outer layer surface of the insulating section for the respective phases. These ground layers have different colors corresponding to the respective phases.

Thus, the ground layers are provided on the outer layer surface of the insulating section for the respective phases, and have different colors corresponding to the respective phases. Accordingly, each phase can be easily identified by simply providing the ground layers. Therefore, the phases can be more easily checked during installation.

Further, since the phases can be easily identified on the basis of the ground layers, it is unnecessary to provide marks or the like which are used to identify the phases. This serves to reduce the number of steps required for assembly.

### (Thirtieth Embodiment)

A closed switch gear according to the present embodiment is similar to the closed switch gear according to the twenty-ninth embodiment. However, the ground layers have different colors at the positions of connections to a receiving end and transformers.

Thus, each phase can be easily identified by simply providing the ground layers. Therefore, the phases can be more easily checked during a site installing operation such as a connection of a cable to the receiving end or a connection to the transformer.

### (Thirty-first Embodiment)

A closed switch gear according to the present embodiment is similar to the closed switch gear according to the first to thirtieth embodiment. However, the insulating container of the vacuum valve is subjected to a silane coupling treatment.

The above described figures show the valve mold sections in which the vacuum valve is covered with the insulating section. However, the external shape of this equipment may be changed as long as the vacuum valve is covered with a thermosetting resin such as epoxy.

When the surface of the insulator container of the vacuum valve, composed of, for example, ceramic or glass, is thus subjected to a silane coupling treatment, the adhesion between the insulating container and the insulator can be significantly improved. This in turn greatly improves the insulating performance of the interface between the insulating container and the resin. As a result, the valve mold sections can be miniaturized. Therefore, a more reliable switch gear can be provided.

FIG. 48 is a characteristic diagram showing an example of the effects, on the insulation characteristic, of the silane coupling treatment applied to ceramic.

FIG. 48 indicates that both partial discharge and dielectric breakdown characteristics of the interface between the ceramic and epoxy can be significantly improved by subjecting the ceramic surface, the insulating container of the vacuum valve, to the silane coupling treatment.

The silane coupling treatment also serves to greatly improve the adhesion of the interface between the ceramic and epoxy. The insulating performance can also be improved.

Similar effects are also produced if the insulating container is made of glass.

### (Thirty-second Embodiment)

A closed switch according to the present embodiment is a variation of the closed switch gear according to the thirty-first embodiment.

As shown in FIGS. 23 and 24, the metallic shields 25 and 26 are provided on the fixed and movable sides, respectively, of the vacuum valve 20a.

In the present embodiment, the metallic shields 25 and 26 are coated with a conductive paint. The surface of insulating container 98a of the vacuum valve 20a is subjected to a silane coupling treatment.

Further, in the present embodiment, the metallic shields 25 and 26 and the vacuum valve 20a are covered with a thermosetting resin such as epoxy to form the valve mold section 1a.

FIG. 24 shows the valve mold sections in which the vacuum valve is covered with the insulating section. However, the external shape of this equipment may be changed as long as the vacuum valve is covered with a thermosetting resin such as epoxy.

When a thermosetting resin such as epoxy is used for casting, the resin between each of the metallic shields 25 and 16, provided at the respective ends of the vacuum valve 20a, and the insulating container 98a of the vacuum valve 20a may be released toward the metallic shield 25 or 16 owing to its setting and contraction.

However, in the present embodiment, the conductive paint is transferred to the surface of the released resin. Accordingly, the release does not cause partial discharge. This serves to improve the insulating performance and thus yields.

As a result, it is possible to miniaturize the components and provide a more reliable switch gear.

### (Thirty-third Embodiment)

A closed switch according to the present embodiment is a variation of the closed switch gears according to the first to thirty-second embodiments.

In the present embodiment, an epoxy resin containing, as a filler, inorganic particles having two or more types of particle size distributions and rubber particles having a core shell structure is used as insulating material for the insulating section, which covers the switch gear components such as the vacuum valve, valve movable side sections, bus connecting sections, and main circuit external connecting sections.

That is, the switch gear components such as the vacuum valve, valve movable side sections, bus connecting sections, and main circuit external connecting sections are covered with the epoxy resin containing, as a filler, inorganic particles having two or more types of particle size distributions and rubber particles having a core shell-structure. A switch gear is constructed by connecting the components together according to an applied circuit.

Here, preferably, the inorganic particles used as a filler are, for example, spherical fused silica.

This helps improve the insulation characteristic.

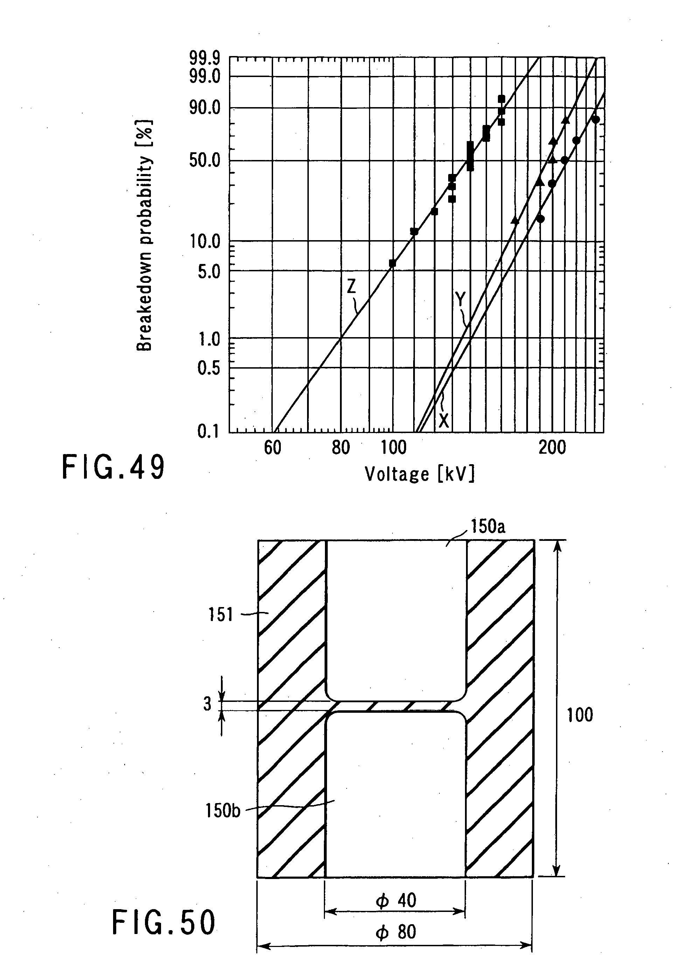

FIG. 49 shows an example of insulation characteristic of an epoxy resin observed if various fillers are used.

This data on the insulation characteristic has been obtained by using a sample shaped as shown in FIG. 50. In this sample, a pair of electrodes 150a and 150b with a gap length of 3 mm are covered with an epoxy resin 151.

Further, X, Y, and Z in FIG. 49 denote the characteristics of the fillers described below.
X (resin to which the present embodiment is applied): spherical silica and rubber particles having a core shell structure
Y (comparative example 1): spherical silica
Z (comparative example 2): alumina

As shown in FIG. 49, a comparison of X with Y indicates that the dielectric breakdown voltage of X is 10% higher than that of Y.

X has a higher breakdown voltage than Y because the progress of discharge is suppressed by the rubber particles. The use of the epoxy resin according to the present embodiment enables the switch gear to be further miniaturized. As a result, a more reliable switch gear can be provided.

In the closed switch gears according to the above embodiments, the ground layer is provided in the outer peripheral portion of the solid insulator. If the ground layer is provided in the outer peripheral portion of the solid insulator, the electric stress inside the solid insulator is much higher than that generated if the outer peripheral portion is not provided with the ground layer. Accordingly, the insulation characteristic of the solid insulator is a very important element.

In the present embodiment, an epoxy resin, which has an excellent insulation characteristic, is applied to enable a design for much higher stress. This helps reduce the size of the switch gear. Consequently, a more reliable switch gear can be provided.

A comparison of Y with Z indicates that the breakdown voltage of Y is 50% higher than that of Z. Accordingly, the spherical silica is effective as inorganic particles used as a filler.

Further, the use of the epoxy resin according to the present embodiment improves thermomechanical characteristics including a creep characteristic as ell as fracture toughness. Accordingly, the vacuum valve can resist cracking more successfully during casting. Therefore, a more reliable switch gear is obtained.

### (Thirty-fourth Embodiment)

The present invention is not limited to the above embodiments. Many variations may be made to the present invention upon implementation.

For example, in the description of the above embodiments, the valve movable side mold section is provided with two or three joining sections. However, the present invention is not limited to'this aspect. The number of joining sections can be changed according to a required circuit configuration.

Further, the embodiments can be properly combined together if possible to produce combined effects.

## Claims

1. A switch gear comprising:
a plurality of switch molded sections (1a-1f) respectively including
a switch gear constituting equipment (20a-20f),
a first solid insulating section (86a,b) to insulate the switch gear constituting equipment (20a-20f),
a first joining section (23a-f) of said first solid insulating section (86a,b) used to join a fixed side of the switch gear constituting equipment (20a-20f), and
a second joining section (24a-f) of said first solid insulating section (86a,b) used to join to a common movable side of the switch gear constituting equipment (20a-20f); and
a switch movable side molded section (2) comprising
a plurality of third joining sections (34a-f) of a second solid insulating section (87),
a conductor (33) which is electrically connected to a movable side conductor (22a) of the switch gear constituting equipment (20a-20f) when the second joining section (24a-f) is joined to any of the third joining sections (34a-f), and
said second solid insulating section (87) insulates the conductor (33);
wherein said plurality of switch molded sections (1a-1f) and said switch movable side molded section (2) are jointed together in the vertical direction; and
wherein an insulator (19a,b) having a smaller elastic modulus than the first and second solid insulating sections (86a,b;87) is respectively sandwiched at least between the second and third joining sections (24a-f;34a-f) and a thickness (t2) of said insulators (19a,b) is larger than a gap (t1) between the joining sections present when the corresponding molded sections are assembled together without inserting the respective insulator such that an elastic force is exerted between the joining sections (24a-f;34a-f) after joining.

2. The switch gear according to claim 1, wherein a thickness (t3) at the center of the insulator (19a-f) is larger than a thickness (t4) at the outer periphery thereof.

3. The switch gear according to claim 1, wherein the gap between the joining sections to be joined together is smaller in the center (t5) than in the outer periphery (t6) thereof.

4. The switch gear according to claim 1, wherein
one of the joining sections to be joined together is concave, while the other is convex, and
joining surfaces of the joining sections to be joined together are inclined at an angle of 25 DEG to 50 DEG with a direction perpendicular to a joining direction (F3).

5. The switch gear according to any one of claims 1 to 4, wherein at least one of said switch gear constituting equipment (20a-20f) is a disconnecting switch (20a).

6. The switch gear according to claim 5, wherein three phases are integrated together in at least one of the switch molded section (1a) and the switch movable side molded section (2).

7. The switch gear according to claim 5, further comprising:
a first ground layer (88a) provided on a surface of the first solid insulating section (86); and
a second ground layer (89) provided on a surface of the second solid insulating section (87),
wherein any of the third joining sections is joined to the second joining section.

8. The switch gear according to claim 7, further comprising:
a disk electrode (39a) arranged close to the conductor (33) and embedded in the second solid insulating section (87); and
an electrode connecting conductor (39b) connected the disk electrode (39a) arranged close to the conductor and projecting out, the electrode connecting conductor (39b) being insulated from the second ground layer (89).

9. The switch gear according to claim 5, wherein
a first surface of the second solid insulating section (87) is a concave surface in which a hole (30) is formed,
at least one of the third joining sections (34a,34b) is provided on a second surface lying opposite the first surface, and
the switch gear comprises a contactor (13) provided in the conductor (33) and arranged on the concave surface.

10. The switch gear according to claim 5, wherein
a first surface of the second solid insulating section (87) is a concave surface in which a hole (30) is formed,
at least one of the third joining sections (34a,34b) is provided on a second surface lying opposite the first surface, and
the switch gear comprises a conductive shield (35) embedded in the second solid insulating section (87), surrounding the hole (30), and having substantially the same potential as that at the conductor (33).

11. The switch gear according to claim 10, further comprising a shield conductor (38) in which the conductive shield (35), a plurality of joining-section conductive shields (35a,35b) embedded in the second solid insulating section (87) and surrounding the plurality of third joining sections (34a,34b), and the conductor (33) are integrated together.

12. The switch gear according to claim 10, wherein
the hole (30) is closed,
an insulating medium composed of a gas is sealed into the closed hole, and
the switch gear comprises an insulating operating rod (31a) connected to the movable side conductor (22a) and placed in the closed hole if any of the third joining sections (34a and 34b) is joined to the second joining section (24a).

13. The switch gear according to claim 12, wherein
an end of the conductive shield (35) which is closer to the first surface is located, in an axial direction (F1) of the insulating operating rod (31a), closer to the movable side conductor (22a) than to a position halfway between a tip of embedding metal (36) embedded in the insulating operating rod (31a) at a position closer to the movable side conductor (22a) and a tip of embedding metal (37) embedded in the insulating operating rod (31a) at a position opposite to the movable side conductor (22a).

14. The switch gear according to claim 12, wherein
a first distance (Ra) between the second solid insulating section (87) and an axis of the insulating operating rod (31a) at a position surrounded by the conductive shield (35) is smaller than a second distance (Rb) between the second solid insulating section (87) and the axis of the insulating operating rod (31a) at a position which is closer to the first surface and which is not surrounded by the conductive shield (35),
a variation from the first distance to the second distance is continuous, and
a side of the hole (30) does not contain any surfaces perpendicular to the axial direction (F1) of the insulating operating rod (30).

15. The switch gear according to claim 5, further comprising:
a movable side conductive shield (26) covering a movable side end of an insulating container (98a) of the switch (20a); and
a fixed side conductive shield (25) covering a fixed side end of the insulating container (98a) of the switch (20a).

16. The switch gear according to claim 15, wherein
the movable side conductive shield comprises a portion (26a) which surrounds the insulating container (98a), a flat portion (26b) which is substantially parallel with a movable side flange (90a) of the switch, and a portion (26c) surrounding a movable side conducting shaft (91) of the switch,
the outer diameter (ΦA) of the portion (26a) surrounding the insulating container is larger than the outer diameter (ΦB) of the portion (26c) surrounding the movable side conducting shaft (91), and
a surface between the portion (26a) surrounding the insulating container and the flat portion (26b) is a curved surface.

17. The switch gear according to claim 15, wherein
the first joining section (23a) is concave, and
the fixed side conductive shield (25) comprises a portion (25a) covering the insulating container (98a) and a portion (25c) surrounding a central portion of a hole in the first joining section.

18. The switch gear according to claim 5, wherein a fixed side conductor (21) of the switch (20a) is concave.

19. The switch gear according to claim 5, wherein the first solid insulating section (86a) comprises a transformer (6) on its outer peripheral surface.

20. The switch gear according to claim 19, wherein, when the second joining sections (24a,24b) are joined to the third joining sections (34a,34b), respectively, then in the axial direction (F2) of the switch (20a), the position of the transformer (6) at the switch molded section (1a) differs from the position of the transformer (6) at the adjacent switch molded section (1b).

21. The switch gear according to claim 5, further comprising transformer (6) surrounding a side of the switch (20a) and embedded in the first solid insulating section (86).

22. The switch gear according to claim 5, wherein
the switch molded section comprises flanges (92a,92b) on its movable and fixed sides, respectively, and
the flange sections (92a,92b) have a larger outer diameter than the first solid insulating section (86).

23. The switch gear according to claim 5, further comprising
a bus connecting molded section (3) comprising a bus connecting conductor (40) having three or more connecting ends,
a solid insulating section (93) to insulate the bus connecting conductor,
fourth joining sections (41a,41b) of said solid insulating section (93) used to join those of the connecting ends which are opposite to each other and which are used for a bus, and
a fifth joining section (42) of said solid insulating section (93) used to join those of the connecting ends which are used to join connecting ends for joining the switch, a central axis of each of the fourth joining sections (41a,41b) not crossing a central axis of the fifth joining section (42).

24. The switch gear according to claim 23, wherein one (41a) of the fourth joining sections faces toward front of the switch molded section (1a) and switch movable side molded section (2), and the other (41b) of the fourth joining sections faces toward rear of the switch molded section (1a) and switch movable side molded section (2).

25. The switch gear according to claim 23, wherein a distance between the central axis of each of the fourth joining sections (42a,42b) and the central axis of the fifth joining section (42) is substantially half a distance between central axes of the adjacent third joining sections (34a,34b).

26. The switch gear according to claim 5, further comprising
a main circuit connecting molded section (4) comprising a main circuit connecting conductor (45) having a plurality of connecting ends and connecting the switch molded section (1b) and a main circuit external lead-in cable (5) together,
a solid insulating section (94) to insulate the main circuit connecting conductor, and
joining sections (46,47) of said solid insulating section (94) used to join the connecting ends of the main circuit connecting conductor (45).

27. The switch gear according to claim 26, further comprising
a disk electrode (49a) arranged close to the main circuit connecting conductor (45) and embedded in a solid insulating section (94) used to insulate the main circuit connecting conductor; and
an electrode connecting conductor (49b) connected the disk electrode (49a) arranged close to the main circuit connecting conductor (45) and projecting out, the electrode connecting conductor (49b) being insulated from a ground layer (95) provided on a surface of the solid insulating section (94) used to insulate the main circuit connecting conductor.

28. The switch gear according to claim 5, further comprising
the plurality of switch movable side molded sections (2d,2e) arranged so that the central axes of the plurality of third joining sections (34a,34b) are parallel with each other.

29. The switch gear according to claim 28, wherein a distance between the central axis of one of the third joining sections of one of the plurality of switch movable side molded sections and the central axis of an adjacent one of the third joining sections of the other switch movable side molded section is substantially equal to a distance between the adjacent third joining sections in each of the switch movable side molded sections.

30. The switch gear according to any one of claims 1 to 29, wherein the solid insulating section uses as insulating material an epoxy resin containing as a filler inorganic particles comprising at least two types of particle size distributions and rubber particles having a core shell structure.

## Patentansprüche

1. Schaltanlage, umfassend:
eine Mehrzahl von Schalterformabschnitten (1a-1f) mit jeweils
einer Schaltanlagen-Aufbaueinrichtung (20a-20f), einem ersten festen Isolierabschnitt (86a,b) zum Isolieren der Schaltanlagen-Aufbaueinrichtung (20a-20f),
einem ersten Verbindungsabschnitt (23a-f) des ersten festen Isolierabschnitts (86a,b), der für eine Verbindung einer feststehenden Seite der Schaltanlagen-Aufbaueinrichtung (20a-20f) verwendet wird, und
einem zweiten Verbindungsabschnitt (24a-f) des ersten festen Isolierabschnitts (86a,b), der zur Verbindung mit einer gemeinsamen beweglichen Seite der Schaltanlagen-Aufbaueinrichtung (20a-20f) verwendet wird, und
einen Schalterformabschnitt der beweglichen Seite (2) mit
einer Mehrzahl von dritten Verbindungsabschnitten (34a-f) eines zweiten festen Isolierabschnitts (87),
einem Leiter (33), der mit einem Leiter der beweglichen Seite (22a) der Schaltanlagen-Aufbaueinrichtung (20a-20f) elektrisch verbunden ist, wenn der zweite Verbindungsabschnitt (24a-f) mit irgendeinem der dritten Verbindungsabschnitte (34a-f) verbunden ist, und
wobei der zweite feste Isolierabschnitt (87) den Leiter (33) isoliert,
wobei die Mehrzahl von Schalterformabschnitten (1a-1f) und der Schalterformabschnitt der beweglichen Seite (2) in der Vertikalenrichtung miteinander verbunden sind; und
wobei ein Isolator (19a,b) mit einem kleineren Elastizitätsmodul als die ersten und die zweiten festen Isolierabschnitte (86a,b; 87) jeweils mindestens zwischen den zweiten und den dritten Verbindungsabschnitten (24a-f; 34a-f) eingefügt ist, und eine Dicke (t2) der Isolatoren (19a,b) größer als ein zwischen den Verbindungsabschnitten vorhandener Zwischenraum (t1), wenn die entsprechenden Formabschnitte ohne Einfügen des jeweiligen Isolators zusammengebaut sind, derart ist, dass nach dem Verbinden zwischen den Verbindungsabschnitten (24a-f; 34a-f) eine elastische Kraft ausgeübt wird.

2. Schaltanlage nach Anspruch 1, wobei eine Dicke (t3) an der Mitte des Isolators (19a-f) größer als eine Dicke (t4) am Außenumfang desselben ist.

3. Schaltanlage nach Anspruch 1, wobei der Zwischenraum zwischen den miteinander zu verbindenden Verbindungsabschnitten in der Mitte (t5) kleiner als am Außenumfang (t6) derselben ist.

4. Schaltanlage nach Anspruch 1, wobei
einer der miteinander zu verbindenden Verbindungsabschnitte konkav ist, während der andere konvex ist, und
Verbindungsoberflächen der miteinander zu verbindenden Verbindungsabschnitte in einem Winkel von 25° bis 50° zu einer zur Verbindungsrichtung (F3) senkrechten Richtung geneigt sind.

5. Schaltanlage nach einem der Ansprüche 1 bis 4, wobei mindestens eine der Schaltanlagen-Aufbaueinrichtungen (20a-20f) ein Trennschalter (20a) ist.

6. Schaltanlage nach Anspruch 5, wobei drei Phasen in dem Schalterformabschnitt (1a) und/oder dem Schalterformabschnitt der beweglichen Seite (2) zusammen integriert sind.

7. Schaltanlage nach Anspruch 5 mit ferner:
einer ersten Erdungsschicht (88a), die an einer Oberfläche des ersten festen Isolierabschnitts (86) vorgesehen ist; und
einer zweiten Erdungsschicht (89), die an einer Oberfläche des zweiten festen Isolierabschnitts (87) vorgesehen ist,
wobei irgendeiner der dritten Verbindungsabschnitte mit dem zweiten Verbindungsabschnitt verbunden ist.

8. Schaltanlage nach Anspruch 7 mit ferner:
einer Scheibenelektrode (39a), die nahe dem Leiter (33) angeordnet ist und in dem zweiten festen Isolierabschnitt (87) eingebettet ist; und
einem Elektrodenverbindungsleiter (39b), der mit der nahe an dem Leiter angeordneten Scheibenelektrode (39a) verbunden ist und hervorsteht, wobei der Elektrodenverbindungsleiter (39b) gegenüber der zweiten Erdungsschicht (89) isoliert ist.

9. Schaltanlage nach Anspruch 5, wobei
eine erste Oberfläche des zweiten festen Isolierabschnitts (87) eine konkave Oberfläche ist, in der eine Öffnung (30) ausgebildet ist,
mindestens einer der dritten Verbindungsabschnitte (34a, 34b) an einer entgegengesetzt zur ersten Oberfläche liegenden zweiten Oberfläche vorgesehen ist, und
die Schaltanlage einen Schütz (13) aufweist, der in dem Leiter (33) vorgesehen und an der konkaven Oberfläche angeordnet ist.

10. Schaltanlage nach Anspruch 5, wobei
eine erste Oberfläche des zweiten festen Isolierabschnitts (87) eine konkave Oberfläche ist, in der eine Öffnung (30) ausgebildet ist,
mindestens einer der dritten Verbindungsabschnitte (34a, 34b) an einer entgegengesetzt zur ersten Oberfläche liegenden zweiten Oberfläche vorgesehen ist, und
die Schaltanlage eine leitende Abschirmung (35) umfasst, die in dem zweiten festen Isolierabschnitt (87) eingebettet ist, die Öffnung (30) umgibt und im Wesentlichen das gleiche Potential wie das des Leiters (33) aufweist.

11. Schaltanlage nach Anspruch 10, ferner mit einem Abschirmungsleiter (38), in dem die leitende Abschirmung (35), eine Mehrzahl von leitenden Abschirmungen des Verbindungsabschnitts (35a, 35b), die in dem zweiten festen Isolierabschnitt (87) eingebettet sind und die Mehrzahl von dritten Verbindungsabschnitte (34a, 34b) umgeben, und der Leiter (33) zusammen integriert sind.

12. Schaltanlage nach Anspruch 10, wobei
die Öffnung (30) geschlossen ist,
ein aus einem Gas bestehendes Isoliermedium in der geschlossenen Öffnung dicht eingeschlossen ist, und
die Schaltanlage einen Isolier-Betätigungsstab (31a) umfasst, der mit dem Leiter der beweglichen Seite (22a) verbunden ist und in der geschlossenen Öffnung platziert ist, wenn einer der dritten Verbindungsabschnitte (34a und 34b) mit dem zweiten Verbindungsabschnitt (24a) verbunden ist.

13. Schaltanlage nach Anspruch 12, wobei
ein Ende der leitenden Abschirmung (35), das näher an der ersten Oberfläche liegt, sich in axiale Richtung (F1) des Isolier-Betätigungsstabs (31a) näher an dem Leiter der beweglichen Seite (22a) als an einer Position innerhalb der Strecke zwischen einer Spitze eines Einbettungsmetalls (36), die in dem Isolier-Betätigungsstab (31a) an einer Position eingebettet ist, die näher an dem Leiter der beweglichen Seite (22a) liegt, und einer Spitze eines Einbettungsmetalls (37), die in dem Isolier-Betätigungsstab (31a) an einer Position eingebettet ist, die entgegengesetzt zu dem Leiter der beweglichen Seite (22a) ist, befindet.

14. Schaltanlage nach Anspruch 12, wobei
ein erster Abstand (Ra) zwischen dem zweiten festen Isolierabschnitt (87) und einer Achse des Isolier-Betätigungsstabs (31a) an einer von der leitenden Abschirmung (35) umgebenen Position kleiner ist als ein zweiter Abstand (Rb) zwischen dem zweiten festen Isolierabschnitt (87) und der Achse des Isolier-Betätigungsstabs (31a) an einer Position, die näher an der ersten Oberfläche liegt und die nicht von der leitenden Abschirmung (35) umgeben ist,
eine Variation von dem ersten Abstand zu dem zweiten Abstand kontinuierlich ist, und
eine Seite der Öffnung (30) keine zur Axialrichtung (F1) des Isolier-Betätigungsstabs (30) senkrechten Oberflächen enthält.

15. Schaltanlage nach Anspruch 5 mit ferner:
einer leitenden Abschirmung der beweglichen Seite (26), die ein Ende der beweglichen Seite eines Isolierbehälters (98a) des Schalters (20a) bedeckt, und
einer leitenden Abschirmung der feststehenden Seite (25), die ein Ende der feststehenden Seite des Isolierbehälters (98a) des Schalters (20a) bedeckt.

16. Schaltanlage nach Anspruch 15, wobei
die leitende Abschirmung der beweglichen Seite einen Teil (26), der den Isolierbehälter (98a) umgibt, einen flachen Teil (26b), der zu einem Flansch der beweglichen Seite (90a) des Schalters im Wesentlichen parallel ist, und einen Teil (26c), der eine Leitungsachse der beweglichen Seite (91) des Schalters umgibt, umfasst,
der Außendurchmesser (ΦA) des den Isolierbehälter umgebenden Teils (26a) größer ist als der Außendurchmesser (ΦB) des die Leitungsachse des beweglichen Teils (91) umgebenden Teils (26c), und
eine Oberfläche zwischen dem den Isolierbehälter umgebenden Teil (26a) und dem flachen Teil (26b) eine gekrümmte Oberfläche ist.

17. Schaltanlage nach Anspruch 15, wobei
der erste Verbindungsabschnitt (23a) konkav ist, und
die leitende Abschirmung der feststehenden Seite (25) einen den Isolierbehälter (98a) bedeckenden Teil (25a) und einen einen Zentralbereich einer Öffnung in dem ersten Verbindungsabschnitt umgebenden Teil (25c) umfasst.

18. Schaltanlage nach Anspruch 5, wobei ein Leiter der feststehenden Seite (21) des Schalters (20a) konkav ist.

19. Schaltanlage nach Anspruch 5, wobei der erste feste Isolierabschnitt (86a) einen Transformator (6) an dessen Außenumfangsfläche umfasst.

20. Schaltanlage nach Anspruch 19, wobei, wenn die zweiten Verbindungsabschnitte (24a, 24b) jeweils mit den dritten Verbindungsabschnitten (34a, 34b) verbunden sind, dann die Position des Transformators (6) an dem Schalterformabschnitt (1a) in der Axialrichtung (F2) des Schalters (20a) von der Position des Transformators (6) an dem benachbarten Schalterformabschnitt (1b) verschieden ist.

21. Schaltanlage nach Anspruch 5, ferner mit einem Transformator (6), der eine Seite des Schalters (20a) umgibt und in dem ersten festen Isolierabschnitt (86) eingebettet ist.

22. Schaltanlage nach Anspruch 5, wobei
der Schalterformabschnitt jeweils Flansche (92a, 92b) an dessen beweglichen und feststehenden Seiten umfasst, und
die Flanschabschnitte (92a, 92b) einen größeren Außendurchmesser als der erste feste Isolierabschnitt (86) aufweisen.

23. Schaltanlage nach Anspruch 5, ferner mit
einem Busverbindungsformabschnitt (3), der einen Busverbindungsleiter (40) mit drei oder mehr Verbindungsenden umfasst,
einem festen Isolierabschnitt (93) zum Isolieren des Busverbindungsleiters,
vierten Verbindungsabschnitten (41a, 41b) des festen Isolierabschnitts (93), die zum Verbinden der einander gegenüberliegenden Verbindungsenden verwendet werden und die für einen Bus verwendet werden, und
einem fünften Verbindungsabschnitt (42) des festen Isolierabschnitts (93), der zum Verbinden der Verbindungsenden verwendet wird, die zum Verbinden von Verbindungsenden zum Verbinden des Schalters verwendet werden, wobei eine Mittelachse von jedem der vierten Verbindungsabschnitte (41a, 41b) die Mittelachse des fünften Verbindungsabschnitts (42) nicht kreuzt.

24. Schaltanlage nach Anspruch 23, wobei einer (41a) der vierten Verbindungsabschnitte zu der Vorderseite des Schalterformabschnitts (1a) und des Schalterformabschnitts der beweglichen Seite (2) gerichtet ist und der andere (41b) der vierten Verbindungsabschnitte zu der Rückseite des Schalterformabschnitts (1a) und des Schalterformabschnitts der beweglichen Seite (2) gerichtet ist.

25. Schaltanlage nach Anspruch 23, wobei der Abstand zwischen der Mittelachse von jedem der vierten Verbindungsabschnitte (42a, 42b) und der Mittelachse des fünften Verbindungsabschnitts (42) im Wesentlichen der halbe Abstand zwischen Mittelachsen der benachbarten dritten Verbindungsabschnitte (34a, 34b) ist.

26. Schaltanlage nach Anspruch 5, ferner mit
einem Hauptstromkreisverbindungsformabschnitt (4) mit einem Hauptstromkreisverbindungsleiter (45), der eine Mehrzahl von Verbindungsenden aufweist und den Schalterformabschnitt (1b) und ein externes Hauptstromkreiseinführungskabel (5) miteinander verbindet,
einem festen Isolierabschnitt (94) zum Isolieren des Hauptstromkreisverbindungsleiters, und
Verbindungsabschnitten (46, 47) des festen Isolierabschnitts (94), die zum Verbinden der Verbindungsenden des Hauptstromkreisverbindungsleiters (45) verwendet werden.

27. Schaltanlage nach Anspruch 26 mit ferner
einer Scheibenelektrode (49a), die nahe dem Hauptstromkreisverbindungsleiter (45) angeordnet ist und in einem festen Isolierabschnitt (94), der zum Isolieren des Hauptstromkreisverbindungsleiters verwendet wird, eingebettet ist, und
einem Elektrodenverbindungsleiter (49b), der mit der nahe dem Hauptstromkreisverbindungsleiter (45) angeordneten Scheibenelektrode (49a) verbunden ist und heraussteht, wobei der Elektrodenverbindungsleiter (49b) gegenüber einer Erdungsschicht (95) isoliert ist, die an einer Oberfläche des festen Isolierabschnitts (94), der zum Isolieren des Hauptstromkreisverbindungsleiters verwendet wird, vorgesehen ist.

28. Schaltanlage nach Anspruch 5, wobei ferner
die Mehrzahl von Schalterformabschnitten der beweglichen Seite (2d, 2e) derart angeordnet sind, dass die Mittelachsen der Mehrzahl von dritten Verbindungsabschnitten (34a, 34b) zueinander parallel sind.

29. Schaltanlage nach Anspruch 28, wobei ein Abstand zwischen der Mittelachse von einem der dritten Verbindungsabschnitte von einem der Mehrzahl von Schalterformabschnitten der beweglichen Seite und der Mittelachse von einem angrenzenden der dritten Verbindungsabschnitte des anderen Schalterformabschnitts der beweglichen Seite im Wesentlichen gleich dem Abstand zwischen den angrenzenden dritten Verbindungsabschnitten in jedem der Schalterverbindungsabschnitte der beweglichen Seite ist.

30. Schaltanlage nach einem der Ansprüche 1 bis 29, wobei der feste Isolierabschnitt als Isoliermaterial ein Epoxyharz verwendet, das als Füllstoff anorganische Teilchen, die mindestens zwei Arten von Teilchengrößenverteilungen umfassen, und Kautschukteilchen mit einer Kern-Hülle-Struktur enthält.

## Revendications

1. Installation de commutation comportant :
une pluralité de sections moulées de commutateur (1a à 1f) respectivement comprenant
un équipement constituant une installation de commutation (20a à 20f), une première section isolante solide (86a, b) destinée à isoler l'équipement constituant une installation de commutation (20a à 20f),
une première section de jonction (23a à f) de ladite première section isolante solide (86a, b) utilisée pour relier un côté fixe de l'équipement constituant une installation de commutation (20a à 20f), et
une deuxième section de jonction (24a à f) de ladite première section isolante solide (86a, b) utilisée pour le raccordement à un côté mobile commun de l'équipement constituant une installation de commutation (20a à 20f) ; et
une section moulée du côté mobile de commutateur (2) comportant
une pluralité de troisièmes sections de jonction (34a à f) d'une deuxième section isolante solide (87),
un conducteur (33) qui est électriquement relié à un conducteur du côté mobile (22a) de l'équipement constituant une installation de commutation (20a à 20f) quand la deuxième section de jonction (24a à f) est reliée l'une quelconque des troisièmes sections de jonction (34a à f), et
ladite deuxième section isolante solide (87) isole le conducteur (33) ;
dans laquelle ladite pluralité de sections moulées de commutateur (1a à 1f) et ladite section moulée du côté mobile de commutateur (2) sont reliées ensemble dans la direction verticale ; et
dans laquelle un isolateur (19a, b) ayant un module élastique plus petit que les première et deuxième sections isolantes solides (86a, b ; 87) est enserré de manière respective au moins entre les deuxième et troisièmes sections de jonction (24a à f ; 34a à f) et une épaisseur (t2) desdits isolateurs (19a, b) est plus grande qu'un espace (t1) entre les sections de jonction présentes quand les sections moulées correspondantes sont assemblées sans insérer l'isolateur respectif de telle sorte qu'une force élastique est exercée entre les sections de jonction (24a à f ; 34a à f) après raccordement.

2. Installation de commutation selon la revendication 1, dans laquelle une épaisseur (t3) au centre de l'isolateur (19a à f) est plus grande qu'une épaisseur (t4) à la périphérie extérieure de celui-ci.

3. Installation de commutation selon la revendication 1, dans laquelle l'intervalle entre les sections de jonction devant être reliées est plus petit au centre (t5) que dans la périphérie extérieure (t6) de celles-ci.

4. Installation de commutation selon la revendication 1, dans laquelle une des sections de jonction devant être reliées est concave, alors que l'autre est convexe, et
des surfaces de jonction des sections de jonction devant être reliées sont inclinées avec un angle de 25 degrés à 50 degrés avec une direction perpendiculaire à une direction de jonction (F3).

5. Installation de commutation selon l'une quelconque des revendications 1 à 4, dans laquelle au moins un desdits équipements constituant une installation de commutation (20a à 20f) est un commutateur de déconnexion (20a).

6. Installation de commutation selon la revendication 5, dans laquelle trois phases sont intégrées dans au moins une de la section moulée de commutateur (1a) et de la section moulée du côté mobile de commutateur (2).

7. Installation de commutation selon la revendication 5, comportant en outre :
une première couche de masse (88a) prévue sur une surface de la première section isolante solide (86) ; et
une deuxième couche de masse (89) prévue sur une surface de la deuxième section isolante solide (87),
dans laquelle l'une quelconque des troisièmes sections de jonction est reliée à la deuxième section de jonction.

8. Installation de commutation selon la revendication 7, comportant en outre :
une électrode en forme de disque (39a) disposée près du conducteur (33) et intégrée dans la deuxième section isolante solide (87) ; et
un conducteur de raccordement d'électrode (39b) relié à l'électrode en forme de disque (39a) disposé près du conducteur et dépassant à l'extérieur, le conducteur de raccordement d'électrode (39b) étant isolé de la deuxième couche de masse (89).

9. Installation de commutation selon la revendication 5, dans laquelle
une première surface de la deuxième section isolante solide (87) est une surface concave dans laquelle un trou (30) est formé,
au moins une des troisièmes sections de jonction (34a, 34b) est prévue sur une deuxième surface s'étendant à l'opposé de la première surface, et
l'installation de commutation comporte un contacteur (13) prévu dans le conducteur (33) et disposé sur la surface concave.

10. Installation de commutation selon la revendication 5, dans laquelle
une première surface de la deuxième section isolante solide (87) est une surface concave dans laquelle un trou (30) est formé,
au moins une des troisièmes sections de jonction (34a, 34b) est prévue sur une deuxième surface s'étendant à l'opposé de la première surface, et
l'installation de commutation comporte un blindage conducteur (35) intégré dans la deuxième section isolante solide (87), entourant le trou (30), et ayant sensiblement le même potentiel que le conducteur (33).

11. Installation de commutation selon la revendication 10, comportant en outre un conducteur de blindage (38) dans lequel le blindage conducteur (35), une pluralité de blindages conducteurs de section de jonction (35a, 35b) intégrés dans la deuxième section isolante solide (87) et entourant la pluralité de troisièmes sections de jonction (34a, 34b), et le conducteur (33) sont intégrés ensemble.

12. Installation de commutation selon la revendication 10, dans laquelle
le trou (30) est fermé,
un fluide isolant composé d'un gaz est scellé dans le trou fermé, et
l'installation de commutation comporte une tige d'actionnement isolante (31a) reliée au conducteur du côté mobile (22a) et placée dans le trou fermé si l'une quelconque des troisièmes sections de jonction (34a et 34b) est reliée à la deuxième section de jonction (24a).

13. Installation de commutation selon la revendication 12, dans laquelle
une extrémité du blindage conducteur (35) qui est plus près de la première surface se trouve, dans une direction axiale (F1) de la tige d'actionnement isolante (31a), plus près du conducteur du côté mobile (22a) que dans une position à mi-chemin entre une extrémité de métal intégré (36) intégrée dans la tige d'actionnement isolante (31a) dans une position plus près du conducteur du côté mobile (22a) et une extrémité de métal intégré (37) intégrée dans la tige d'actionnement isolante (31a) dans une position à l'opposé du conducteur du côté mobile (22a).

14. Installation de commutation selon la revendication 12, dans laquelle
une première distance (Ra) entre la deuxième section isolante solide (87) et un axe de la tige d'actionnement isolante (31a) dans une position entourée par le blindage conducteur (35) est plus petite qu'une deuxième distance (Rb) entre la deuxième section isolante solide (87) et l'axe de la tige d'actionnement isolante (31a) dans une position qui est plus près de la première surface et qui n'est pas entourée par le blindage conducteur (35),
une variation depuis la première distance jusqu'à la deuxième distance est continue, et
un côté du trou (30) ne contient aucune surface perpendiculaire à la direction axiale (F1) de la tige d'actionnement isolante (30).

15. Installation de commutation selon la revendication 5, comportant en outre :
un blindage conducteur du côté mobile (26) recouvrant une extrémité du côté mobile d'un réceptacle isolant (98a) du commutateur (20a) ; et
un blindage conducteur du côté fixe (25) recouvrant une extrémité du côté fixe du réceptacle isolant (98a) du commutateur (20a).

16. Installation de commutation selon la revendication 15, dans laquelle
le blindage conducteur du côté mobile comporte une partie (26a) qui entoure le réceptacle isolant (98a), une partie plate (26b) qui est sensiblement parallèle à une bride du côté mobile (90a) du commutateur, et une partie (26c) entourant un arbre conducteur du côté mobile (91) du commutateur,
le diamètre extérieur (ΦA) de la partie (26a) entourant le réceptacle isolant est plus grand que le diamètre extérieur (ΦB) de la partie (26c) entourant l'arbre conducteur du côté mobile (91), et
une surface entre la partie (26a) entourant le réceptacle isolant et la partie plate (26b) est une surface courbe.

17. Installation de commutation selon la revendication 15, dans laquelle
la première section de jonction (23a) est concave, et
le blindage conducteur du côté fixe (25) comporte une partie (25a) recouvrant le réceptacle isolant (98a) et une partie (25c) entourant une partie centrale d'un trou dans la première section de jonction.

18. Installation de commutation selon la revendication 5, dans laquelle un conducteur du côté fixe (21) du commutateur (20a) est concave.

19. Installation de commutation selon la revendication 5, dans laquelle la première section isolante solide (86a) comporte un transformateur (6) sur sa surface périphérique extérieure.

20. Installation de commutation selon la revendication 19, dans laquelle, quand les deuxièmes sections de jonction (24a, 24b) sont associées aux troisièmes sections de jonction (34a, 34b), respectivement, alors, dans la direction axiale (F2) du commutateur (20a), la position du transformateur (6) au niveau de la section moulée de commutateur (1a) diffère de la position du transformateur (6) au niveau de la section moulée de commutateur adjacente (1b).

21. Installation de commutation selon la revendication 5, comportant en outre un transformateur (6) qui entoure un côté du commutateur (20a) et intégré dans la première section isolante solide (86).

22. Installation de commutation selon la revendication 5, dans laquelle
la section moulée de commutateur comporte des brides (92a, 92b) sur ses côtés mobile et fixe, respectivement, et
les sections de bride (92a, 92b) ont un diamètre extérieur plus grand que la première section isolante solide (86).

23. Installation de commutation selon la revendication 5, comportant en outre
une section moulée de raccordement de bus (3) comportant un conducteur de raccordement de bus (40) ayant trois extrémités de raccordement ou plus,
une section isolante solide (93) destinée à isoler le conducteur de raccordement de bus,
des quatrièmes sections de jonction (41a, 41b) de ladite section isolante solide (93) utilisées pour raccordement celles des extrémités de raccordement qui sont à l'opposé l'une de l'autre et qui sont utilisées pour un bus, et
une cinquième section de jonction (42) de ladite section isolante solide (93) utilisée pour raccorder celles des extrémités de raccordement qui sont utilisées pour raccorder des extrémités de raccordement destinées à raccorder le commutateur, un axe central de chacune des quatrièmes sections de jonction (41a, 41b) ne croisant pas un axe central de la cinquième section de jonction (42).

24. Installation de commutation selon la revendication 23, dans laquelle une (41a) des quatrièmes sections de jonction est orientée vers l'avant de la section moulée de commutateur (1a) et de la section moulée du côté mobile de commutateur (2), et l'autre (41b) des quatrièmes sections de jonction est orientée vers l'arrière de la section moulée de commutateur (1a) et de la section moulée du côté mobile de commutateur (2).

25. Installation de commutation selon la revendication 23, dans laquelle une distance entre l'axe central de chacune des quatrièmes sections de jonction (42a, 42b) et l'axe central de la cinquième section de jonction (42) est sensiblement à la moitié d'une distance entre les axes centraux des troisièmes sections de jonction adjacentes (34a, 34b).

26. Installation de commutation selon la revendication 5, comportant en outre
une section moulée de raccordement de circuit principal (4) comportant un conducteur de raccordement de circuit principal (45) ayant une pluralité d'extrémités de raccordement et reliant ensemble la section moulée de commutateur (1B) et un câble d'entrée externe de circuit principal (5),
une section isolante solide (94) destinée à isoler le conducteur de raccordement de circuit principal, et
des sections de jonction (46, 47) de ladite section isolante solide (94) utilisée pour relier les extrémités de raccordement du conducteur de raccordement de circuit principal (45).

27. Installation de commutation selon la revendication 26, comportant en outre
une électrode en forme de disque (49a) disposée près du conducteur de raccordement de circuit principal (45) et intégrée dans une section isolante solide (94) utilisée pour isoler le conducteur de raccordement de circuit principal ; et
un conducteur de raccordement d'électrode (49b) relié à l'électrode en forme de disque (49a) disposée près du conducteur de raccordement de circuit principal (45) et dépassant vers l'extérieur, le conducteur de raccordement d'électrode (49b) étant isolé d'une couche de masse (95) prévue sur une surface de la section isolante solide (94) utilisée pour isoler le conducteur de raccordement de circuit principal.

28. Installation de commutation selon la revendication 5, comportant en outre
la pluralité de sections moulées du côté mobile de commutateur (2d, 2e) est disposée de telle sorte que les axes centraux de la pluralité de troisièmes sections de jonction (34a, 34b) sont parallèles l'une à l'autre.

29. Installation de commutation selon la revendication 28, dans laquelle une distance entre l'axe central d'une des troisièmes sections de jonction d'une de la pluralité de sections moulées du côté mobile de commutateur et l'axe central d'une section adjacente des troisièmes sections de jonction de l'autre section moulée du côté mobile de commutateur est sensiblement égale à une distance entre les troisièmes sections de jonction adjacentes dans chacune des sections moulées du côté mobile de commutateur .

30. Installation de commutation selon l'une quelconque des revendications 1 à 29, dans laquelle les sections isolantes solides utilisent comme isolant une résine époxyde contenant comme charge des particules minérales comportant au moins deux types de distributions de taille de particule et des particules de caoutchouc ayant une structure d'enveloppe de noyau.
